(19) Europäisches Patentamt
European Patent Office
Office européen des brevets

(11) Veröffentlichungsnummer: **0 213 475 B1**

# (12) EUROPÄISCHE PATENTSCHRIFT

(45) Veröffentlichungstag der Patentschrift: **26.07.89**

(51) Int. Cl.[4]: **C 08 G 18/32**, C 08 G 18/46, C 08 J 9/00

(21) Anmeldenummer: **86111109.4**

(22) Anmeldetag: **12.08.86**

## (54) Neue Esterpolyole, Verfahren zu ihrer Herstellung und ihre Verwendung im Isocyanat-Polyadditionsverfahren.

(30) Priorität: **24.08.85 DE 3530360**
**10.09.85 DE 3532140**
**20.03.86 DE 3609361**

(43) Veröffentlichungstag der Anmeldung:
**11.03.87 Patentblatt 87/11**

(45) Bekanntmachung des Hinweises auf die Patenterteilung:
**26.07.89 Patentblatt 89/30**

(84) Benannte Vertragsstaaten:
**AT BE CH DE FR GB IT LI NL SE**

(56) Entgegenhaltungen:
**DE-A- 2 531 925**
**DE-C- 880 485**
**US-A- 3 154 521**
**US-A- 3 368 985**
**US-A- 3 927 073**
**US-A- 4 442 237**

(73) Patentinhaber: **BAYER AG,**
**D-5090 Leverkusen 1 Bayerwerk (DE)**

(72) Erfinder: **Haas, Peter, Dr., Zwengenbergerstrasse 43,**
**D-5657 Haan 1 (DE)**
Erfinder: **Weber, Hans-Ulrich, Dr., Neustrasse 19,**
**D-4019 Monheim (DE)**
Erfinder: **Sommerfeld, Claus-Dieter, Dr., Oberdreisbach Höhe 42, D-5203 Much (DE)**
Erfinder: **Giersig, Manfred, Dr., Paracelsusplatz 8,**
**D-5000 Köln 80 (DE)**
Erfinder: **Wiedermann, Rolf, Wiesenstrasse 18,**
**D-5068 Odenthal (DE)**

EP 0 213 475 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es wird ein Verfahren zur Herstellung neuer, stickstoffhaltiger, niederviskoser Esterpolyole beansprucht, welche durch Umsetzung von Dicarbonsäuren bzw. ihren Derivaten mit Trisalkanolaminen oder Tetrakis-alkanoldiaminen erhalten werden. Ferner werden die neuen stickstoffhaltigen Esterpolyole und ihre Verwendung im Isocyanat-Polyadditionsverfahren zur Herstellung von Polyurethanen, insbesondere Hartschaumstoffen auf Polyurethan(harnstoff) bzw. Polyisocyanurat-Basis, beansprucht.

Harte Hartschaumstoffe nach dem Isocyanat-Polyadditionsverfahren stellen heute in der Isolationstechnik eine bedeutungsvolle Stoffklasse dar. Es handelt sich dabei im allgemeinen um Polyurethan(harnstoff)- und insbesondere Polyisocyanurat-Hartschaumstoffe, wobei letztere bereits ohne Zusatzmittel eine erhöhte Flammbeständigkeit besitzen.

In der Regel werden solche Hartschaumstoffe aus Polyisocyanaten und Polyetherpolyolen oder einem Gemisch aus Polyether- und Polyesterpolyolen hergestellt. Die Verwendung verschiedener Polyolkomponenten plus Zusatzmittel wird in der Regel dann gewählt, wenn bestimmte Flammschutznormen für die Hartschaumstoffe erfüllt werden müssen.

Vorteil der Polyetherpolyole ist die wahlweise Einstellung definierter Funktionalitäten über die Starterspezies (Polyole oder Polyamine). Hartschaum-spezifische Polyole, z.B. auf der Basis von Sorbit oder Sucrose als Startern, die mehr als 4funktionell und auch niederviskos sind, können auf Polyetherbasis hergestellt werden und zeigen im allgemeinen OH-Zahlen von 200 bis 600.

Zum Erreichen bestimmter Flammschutzkriterien muß man diesen Polyetherrohstoffen beispielsweise noch Polyesterpolyole zumischen, wobei letztere in der Regel hochviskos sind. Die Polyesterpolyole können wegen ihrer vergleichsweise geringeren Funktionalität jedoch nicht unbegrenzt zugesetzt werden, da andernfalls der resultierende Schaumstoff zu weich werden würde. Als weitere Komponenten zur Herstellung flammgeschützter Polyurethanschaumstoffe sind Phosphor- oder Phosphonester oder andere Phosphorderivate zu nennen, die zum überwiegenden Teil nicht einbaufähig sind, also migrieren können und ebenfalls den Schaumstoff weich machen. Vorteilhafter sind bezüglich der Migration die einbaufähigen Phosphonsäureester wie Baytherm® 4090 N/Bayer AG, Leverkusen, die jedoch wegen ihrer Bifunktionalität auch noch weichmachend wirken und daher auch nur begrenzt zugesetzt werden können. Flammschutzmittel auf Halogenbasis haben oftmals ähnliche Wirkung; außerdem geben sie insbesondere beim Abbrennen von Schaumstoffen korrodierende Gase ab.

Die Entwicklung von Hartschaumpolyolen sollte daher durch folgende Kriterien beschrieben werden:

— gegenüber Standardpolyesterpolyolen sollen sie erhöhte Funktionalitäten aufweisen, um auf bislang erforderliche, höherfunktionelle Copolyether verzichten zu können;

— sie sollten möglichst eine niedere Viskosität in höher funktionelle Polyesterpolyolen besitzen;

— sie sollen inhärente Flammschutzeigenschaften aufweisen, die die Mitverwendung nicht einbaufähiger, weichmachender, im Brandfall korrodierende Wirkung ergebender Flammschutzmittel überflüssig machen oder deren Zusatzmenge zu erniedrigen erlauben;

— sie sollen den resultierenden Hartschaumstoffen hohe Wärmestandswerte und hohe mechanische Festigkeit geben.

Gegenstand der Erfindung sind neue, stickstoffhaltige, relativ niederviskose Esterpolyole, welche sich besonders zur Verwendung als Hartschaumpolyole im Isocyanat-Polyadditionsverfahren eignen. Sie besitzen die allgemeine Formel (I)

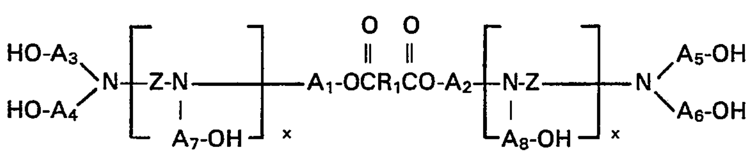

(I)

wobei

$R_1$ eine Bindung oder ein geradkettiger oder verzweigter $C_1$-$C_{12}$-Alkylenrest, der gegebenenfalls durch Heteroatome wie -O-, -S-, -N($C_1$-$C_4$)-Alkyl substituiert sein kann, vorzugsweise ein geradkettiger oder verzweigter Alkylenrest mit 2-4 C-Atomen oder ein ungesättigter Alkenrest mit 2-12 C-Atomen, vorzugsweise der -CH = CH-Rest,

Z ein zweiwertiger, geradkettiger oder verzweigter Alkylenrest mit 2 bis 6 C-Atomen, vorzugsweise der $-CH_2-CH_2-$, $-CH_2-\underset{\displaystyle CH_3}{\underset{|}{CH}}-$, $-(CH_2)_3-$, $-(CH_2)_4-$ oder $-(CH_2)_6-$-Rest ist und

x unabhängig voneinander 0 oder 1, bevorzugt x = 0 ist,

$A_1$ bis $A_8$ gleiche oder verschiedene, zweiwertige, geradkettige oder verzweigte Alkylenreste mit 2 bis 6 C-Atomen, vorzugsweise $-CH_2-CH_2-$, $-(CH_2)_3-$, $-(CH_2)_4-$ sowie $-CH_2-\underset{\displaystyle CH_3}{\underset{|}{CH}}-$, $-CH_2-CH_2-\underset{\displaystyle CH_3}{\underset{|}{CH}}-$, $-CH_2CH_2CH_2-\underset{\displaystyle CH_3}{\underset{|}{CH}}-$-Reste, bei denen die sekundäre -CH-Gruppe einer Hydroxylgruppe benachbart ist, insbesondere $-CH_2-CH_2-$ oder $-CH_2-\underset{\displaystyle CH_3}{\underset{|}{CH}}-$-Reste darstellen

und wobei vorzugsweise in dem Esterpolyol (I) oder seinen Gemischen bzw. seinen Oligomergemischen mindestens 20 Mol-% der Reste $A_3$ bis $A_6$, vorzugs-

weise 25 bis 75 Mol-%, insbesondere 50 bis 75 Mol-% der Reste, einen Rest mit einer sekundären -CH-Gruppe (entsprechend einem sekundären Hydroxyalkylrest) vorzugsweise einen 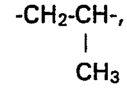 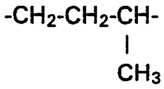 oder 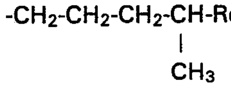Rest, und insbesondere einen 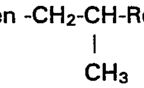Rest darstellen.

Insbesondere sind Esterpolyole bevorzugt, welche zu mehr als 75 Mol-% den Formeln Ia, Ih

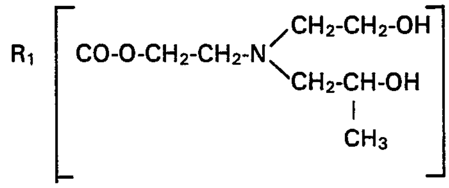

(Ia)

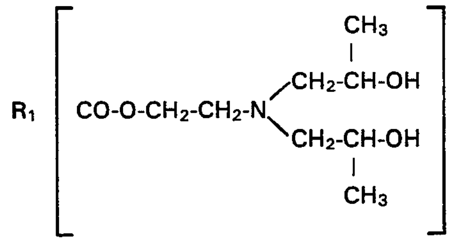

(Ih)

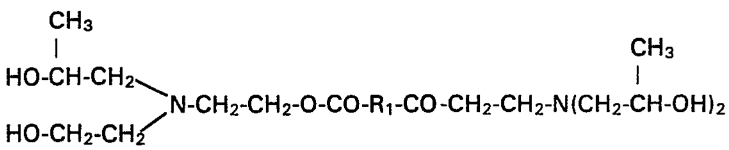

oder Mischkondensaten von Ia und Ih (Formeln Ia/Ih bzw. ihre Mischkondensate sind besonders bevorzugt) sowie

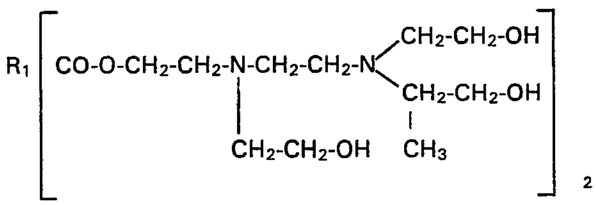

(Im)

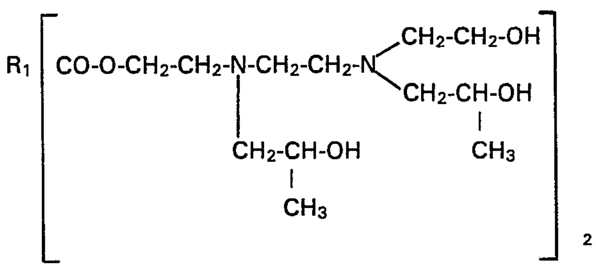

(Ip)

und/oder

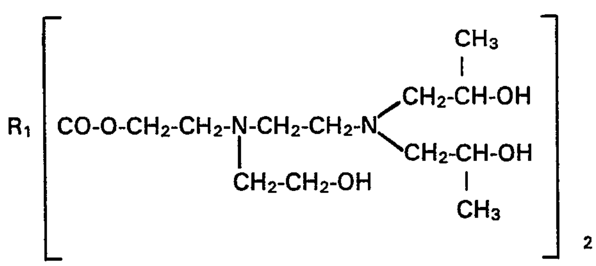

(Iq)

entsprechen, und aus den Dicarbonsäure(derivate)n und den Diolen IIa, h oder III m, p, q aufgebaut werden.

Die erfindungsgemäßen, stickstoffhaltigen Esterpolyole weisen in der Regel eine OH-Zahl von 200 bis 700, bevorzugt von250 bis 650, auf. Ihre Viskositäten betragen in der Regel < 20 000 mPa.s/25°C, im Fall der Oligoesterpolyole < 20 000 mPa.s/25°C, besonders bevorzugt < 10 000 mPa.s/25°C, Viskositäten unter 3500 mPa.s/25°C. Viskositäten unter 3500 mPa.s sind ganz besonders erwünscht, z.B. zwischen 800 bis 3500 mPa.s.

Die Erfindung betrifft auch das Verfahren zur Herstellung der erfindungsgemäßen, stickstoffhaltigen Esterpolyole oder ihrer Oligomerer, der allgemeinen Formel (I), durch Umsetzung von Dicarbonsäure(derivat)en $ROCOR_1COOR$ (R = H, Alkyl, Phenyl) oder der Anhydride dieser Dicarbonsäuren mit Trisalkanolaminen (II) und/oder Tetrakis-alkanoldiaminen (III) unter Abspaltung von Wasser oder Alkoholen bei einem molaren Umsetzungsverhältnis der Dicarbonsäuren, deren Anhydriden oder Estern mit Trisalkanolaminen und/oder Tetrakis-alkanolaminen von 1:2 bis 1:1,2. Beträgt das Verhältnis 1:<2, d.h. bis 1,0:1,2, besonders bevorzugt 1:1,5 bis 1:2, so werden auch höhere Esterhomologe der Verbindungen

(I) (Oligomere), zumeist in der Form von Gemischen, zugänglich. Die Oligomeren, die bei einem Verhältnis von deutlich kleiner 1:2 (z.B. 1:<1,9) hergestellt werden, zeigen mit abnehmendem Anteil an Alkanolaminderivaten (II) bzw. (III) eine zunehmende Viskosität. Derartig höhere Viskositäten sind im allgemeinen weniger bevorzugt, weshalb die Bildung von oligomeren Estern mit Viskositäten >20 000 mPa.s weniger bevorzugt ist. Bevorzugt sind daher die niedermolekularen Derivate der Formel (I) oder ihre Gemische mit oligomeren Estern, bei denen das Umsetzungsverhältnis mindestens bei 1:1,5 liegt. Es können auch molar über 1:2 überschüssige Mengen an II oder III verwendet werden, doch werden diese Mengen nicht eingebaut, sondern vorzugsweise vor Beendigung der Veresterung wieder entfernt.

Innerhalb der Esterpolyole (I) sind die Derivate von Trisalkanolaminen von den Derivaten der Tretraalkanoldiaminen bevorzugt, da erstere niedrigere Viskositäten ergeben.

Gegenstand der Erfindung ist auch die Verwendung der beschriebenen und nach dem beanspruchten Verfahren zugänglichen niederviskosen, stickstoffhaltigen Esterpolyole, vorzugsweise der allgemeinen Formel (I) mit einer OH-Funktionalität von etwa 4 bis 6, weniger bevorzugt ihrer höherviskosen, höherfunktionellen Oligomeren, im Isocyanat-Polyadditionsverfahren zur Herstellung von Polyurethanen, vorzugsweise Hartschaumstoffen auf Polyurethan(harnstoff)-Basis und insbesondere Polyisocyanurat-Basis, insbesondere von flammwidrigen Hartschaumstoffen der Baustoffklasse B-2.

Ausgangsmaterialien für die Herstellung der Esterpolyole (I) sind z.B. Oxalsäure (weniger bevorzugt), Malonsäure, Bernsteinsäure, Glutarsäure, technische Glutarsäure, Adipinsäure, technische Adipinsäure (im wesentlichen Bernstein-/Glutar- und Adipinsäuregemische), Methyladipinsäure, Sebacinsäure, das technische, Isosebacinsäure genannte Dicarbonsäuregemisch, Korksäure, Azelainsäure, Undecandisäure, Dodecandisäure, Diglykolsäure, Thiodiglykolsäure oder auch ungesättigte aliphatische Dicarbonsäuren wie Maleinsäure. Anstelle der freien Dicarbonsäure können auch deren (niedere) Alkylester (Alkylreste bevorzugt $C_1$-$C_6$), sowie deren cyclische oder lineare Anhydride eingesetzt werden.

Unter den Polyalkanolaminen bzw. Polyalkanolpolyaminen sind die Trisalkanolamine (II) oder Tetrakisalkanoldiamine (III)

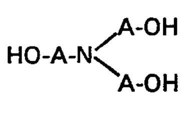

(II) (Trisalkanolamine)

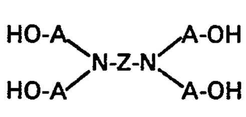

(III) (Tetrakis-alkanoldiamine)

bevorzugt, in denen einer oder zwei der Reste A sekundäre -CH-Gruppen aufweisende Reste, vorzugsweise -$CH_2$-CH-, -$CH_2$-$CH_2$-CH- oder
I I
$CH_3$ $CH_3$
-$CH_2$-$CH_2$-$CH_2$-CH-Reste, insbesondere
I
$CH_3$
-$CH_2$-CH-Reste (entsprechend sekundären Alkohol-
I
$CH_3$
resten in den Alkanolaminen) darstellen und die anderen Reste A -$(CH_2)_{2-6}$-Reste, insbesondere Ethylenreste -$CH_2$-$CH_2$- (entsprechend primären Alkoholresten in den Alkanolaminen) darstellen.

Beispiele für Alkanolamine sind:

(II): *ein* Rest mit *sekundärer* OH-Gruppe:

a) 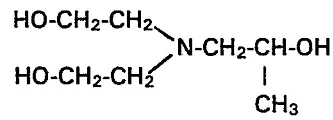

b) 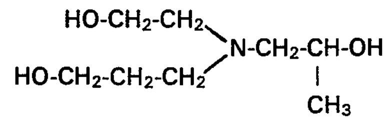

c) 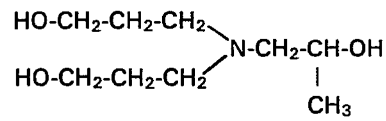

d) 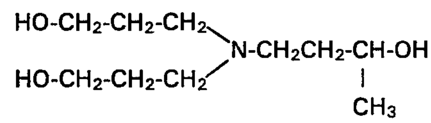

e) 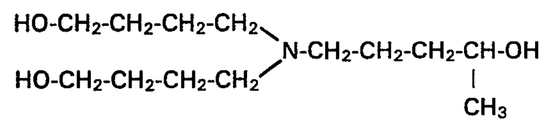

f) 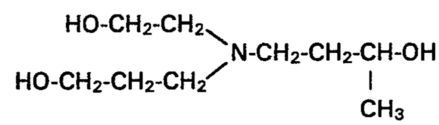

g) 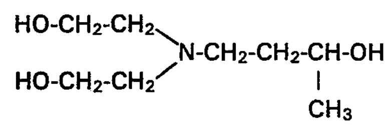

(II) *zwei* Reste mit *sekundären* OH-Gruppen:

h) 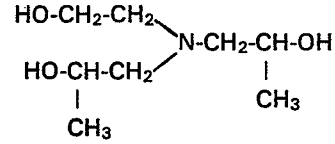

i) 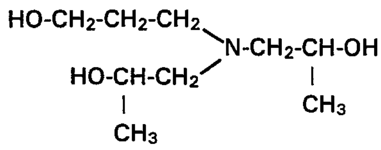

k) 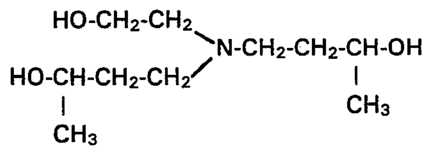

l) 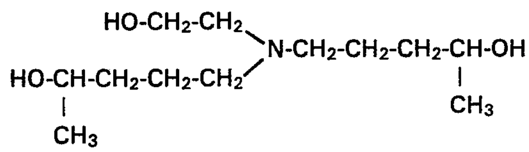

(III) *ein* Rest mit *sekundärer* OH-Gruppe:

m) 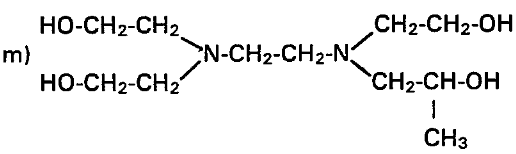

n) 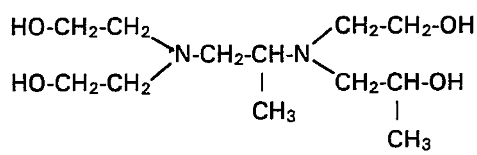

o) 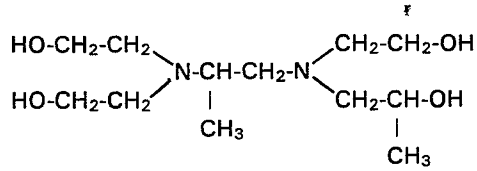

(III) *zwei* Reste mit *sekundärer* OH-Gruppe:

p) 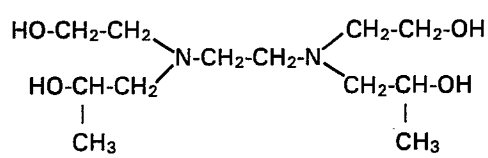

q) 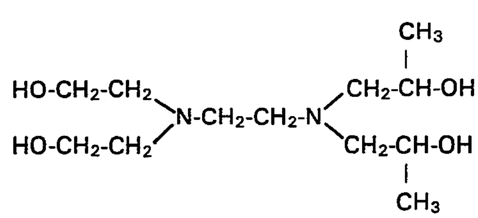

Besonders bevorzugt sind die Verbindungen a), h), m), p) und q) und ihre Gemische, insbesondere die Verbindungen a) und h), sowie die Gemische aus a) und h).

Die Verwendung der Trisalkanolamine (II) ist bevorzugt vor den Tetrakisalkanoldiaminen (III), da letztere die Tendenz zur Bildung höherer Viskositäten in den Esterpolyolen (I) aufweisen und deshalb — trotz höherer Funktionalität — nur da Verwendung finden können, wo diese höheren Viskositäten tolerierbar erscheinen.

Anstelle der oben erwähnten, einen oder zwei sekundäre Hydroxylgruppen aufweisenden, bevorzugten Alkanolamine (II) und/oder Alkanoldiamine (III) kann man jedoch auch Mischungen von (II) mit je drei primären Hydroxylalkylgruppen, z.B.

r) $(HO-CH_2-CH_2)_3-N$

und mit je drei sekundären Hydroxyalkylgruppen, z.B.

s) 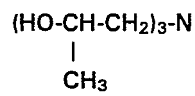

in entsprechenden Molverhältnissen, bevorzugt 2:1 bis 1:2, insbesondere 1:1 einsetzen, obwohl dies eine deutlich weniger bevorzugte Ausführungsform darstellt.

Man kann die genannten Verbindungen (oder auch andere Polyalkanolamine bzw. Polyalkanolpolyamine) in Form ihrer Alkanolaminmischungen mit den Dicarbonsäuren bzw. -Derivaten mischkondensieren. Die Mischkondensate sind weniger bevorzugt vor den Esterpolyolen mit nur einem Alkanolaminderivat, insbesondere a), h) und m) bzw. p) und q).

Tetrakis-alkanoldiamine (III) mit je vier primären Hydroxyalkylgruppen, z.B.

t) $(HO-CH_2-CH_2)_2-N-Z-(CH_2-CH_2-OH)_2$,

(Z hat die bereits für Formel I angeführte Bedeutung)
z.B.

u) $(HO-CH_2-CH_2)_2-N-CH_2-CH_2-N-(CH_2-CH_2-OH)_2$

können zur Herstellung von Esterpolyolen (I) und darauf basierende für Halogenalkan-getriebene Hartschaumstoffe nicht verwendet werden, da sie das Treibmittel, z.B. Frigen®, nicht genügend lösen. Entsprechende Schaumansätze kollabieren bzw. liefern keine verwertbaren Schaumstoffe. Andererseits zeigen Verbindungen (III) mit vier sekundären Hydroxyalkylgruppen, z.B. Verbindung

v) 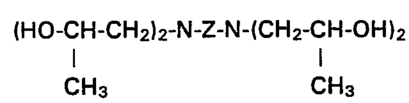

(Z hat die bereits für Formel I angegebene Bedeutung)
z.B.

w) 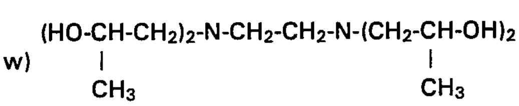

zwar eine hervorragende Treibmittelverträglichkeit, z.B. für Frigen®, jedoch sind im allgemeinen die Wärmestandsfestigkeitswerte und insbesondere die Flammwidrigkeitseigenschaften in den Hartschaumstoffen bereits zu stark reduziert. Ähnlich sind mit Polyalkanoldiaminen der Formel (III) mit drei sekundären und einer primären Hydroxygruppe, z.B. Verbindung

x) 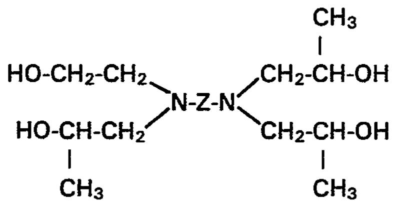

Z ist $-CH_2-CH_2-$ oder 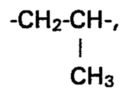

die Wärmestandfestigkeitswerte und Flammwidrigkeitseigenschaften nicht mehr optimal.

Es können zwar auch hier Mischungen von (III) mit primären bzw. sekundären Hydroxyalkylgruppen tragenden Verbindungen eingesetzt werden, doch ist dies auch hier weniger bevorzugt.

Für den Fall, daß man Mischungen aus primären bzw. sekundären Hydroxyalkylgruppen tragenden Alkanolaminderivaten einsetzt, so sollen diese bevorzugt so zusammengesetzt sein, daß sie im Mittel von den Resten $A_3$ bis $A_8$ in Formel (I) bei folgenden Werten von x):

beide x = 0,8 bis 3,2, vorzugsweise 1,5 bis 3 sekundäre Hydroxyalkylreste A und 3,2 bis 9,8, vorzugsweise 2,5 bis 1 primäre Hydroxyalkylgruppen;

bei x = 0 und x = 1:1,0 bis 4,0, vorzugsweise 1,75 bis 3,5 sekundäre Hydroxyalkylreste A und 4,0 bis 1,0, vorzugsweise 3,25 bis 1,5 primäre Hydroxyalkylreste und

bei beiden x = 1:1,2 bis 4,8, vorzugsweise 2 bis 4 sekundäre Hydroxyalkylreste A und 4,8 bis 1,2, vorzugsweise 4 bis 2 primäre Hydroxyalkylreste

enthalten. Die Reste $A_1$ und $A_2$ in Formel (I) werden dabei überwiegend (zu mehr als 75%) aus unverzweigten (primären) Hydroxyalkylgruppen gebildet, da die Veresterung der primären Hydroxyalkylgruppen deutlich bevorzugt vor der Veresterung sekundärer Hydroxylgruppen abläuft. Es wird somit ein eventuell geringer Anteil, bei dem eine Veresterungsreaktion an der sekundären Hydroxylgruppe abläuft [z.B. bei Veresterungsreaktionen von Dicarbonsäuren und a)], in der allgemeinen Formel (I) nicht berücksichtigt.

Es sind jedoch Verfahren bevorzugt, wo die erfindungsgemäßen Ester (I) aus den Dicarbonsäure(derivaten) mit Trisalkanolaminen (II) mit einer sekundären und zwei primären oder im Falle der Tetrakis-alkanoldiamine (III) aus einer sekundären und drei primären und zwei sekundären und zwei primären Hydroxyalkylgruppen aufgebaut werden. Entsprechend aufgebaute Ester stellen besonders geeignete Polyole für die Hartschaumherstellung nach dem Isocyanatpolyadditionsverfahren dar, da sie optimale Eigenschaften sowohl hinsichtlich Treibmittelverträglichkeit als auch Wärmestandfestigkeit bzw. Funktionalitätsaufbau zeigen. Tetra- bzw. hexaprimäre Ester zeigen eine zu schlechte Treibmittelverträglichkeit. Esterpolyole (I) mit mehr als drei, insbesondere mit vier sekundären Hydroxyalkylgruppen (beide Indices x = 0) bzw. Esterpolyole (I) mit mehr als vier sekundären Hydroxyalkylgruppen (bei Tetrolen), d.h. beide Indices x = 1) zeigen zwar gute Treibmittelverträglichkeit, jedoch schon abfallende Flammwidrigkeitseigenschaften und insbesondere auch abfallende Wärmestandswerte.

Ganz bevorzugtes Trisalkanolamin (II) ist daher das

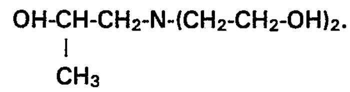

Entsprechend bevorzugt ist ein Esterpolyol der formalen Formel (I), in der $A_1$ und $A_2$ der $-CH_2-CH_2-$-Rest, $A_3$ und $A_5$ der $-CH_2-CH_2-$-Rest und $A_4$ und $A_6$ der sek.-Propylrest $CH-CH_2$-Rest ist.
I
$CH_3$

(Zu untergeordneten Anteilen können auch sekundäre Hydroxyalkylgruppen in die Esterreaktion einbezogen werden, so daß die Reste $A_1$ und $A_2$ auch in untergeordneter Menge den sek.-Propylrest darstellen können.)

Das Verfahren der Herstellung der neuen Esterpolyole entspricht im Prinzip üblichen Ver- bzw. Umesterungsreaktionen zur Herstellung von Esterpolyolen. So werden beispielsweise Dicarbonsäuredialkylester mit entsprechenden Mengen an Trisalkanolaminen auf höhere Temperaturen von etwa 70 bis 140°C erwärmt, wobei das durch die übliche Umesterungsreaktion entstandene Alkanol laufend abdestilliert wird. Vorzugsweise arbeitet man unter Schutzgasen, z.B. Stickstoff, sowie gegebenenfalls Umesterungskatalysatoren. Durch anschliessendes Anlegen von Vakuum bei z.B. 100 bis 150°C können noch Reste an Estergruppen umgesetzt werden. Die Zeitdauer beträgt je nach Umesterungstemperatur eine halbe bis mehrere Stunden. Das Fortschreiten der Ver- bzw. Umesterungsreaktion kann unter anderem an der Säurezahl und der OH-Zahl verfolgt werden. Eine unerwünschte Weiterkondensation zu Oligoestern unter Erhöhung der Viskosität über den optimalen Bereich hinaus kann durch Bestimmung des Viskositätsverlaufs verfolgt werden.

Bei der bevorzugten Anwesenheit von sowohl primären als auch sekundären Hydroxyalkylresten bei der Ver- bzw. Umesterung reagiert die primäre Hydroxygruppe bevorzugt ab, jedoch in untergeordnetem Maße auch etwas die sekundäre Hydroxyalkylgruppe.

Bei der Verwendung von freien Dicarbonsäuren werden die Veresterungstemperaturen im allgemeinen höher gewählt, z.B. 130 bis 200°C, vorzugsweise etwa 140 bis 180°C, wobei im Verlauf von mehreren Stunden das Kondensationswasser abdestilliert, was man durch anschließendes Anlegen von Vakuum noch vervollständigen kann. Auch hier kann eine Verfolgung der Reaktion wie bereits beschrieben erfolgen. Die Mengenverhältnisse zwischen Dicarbonsäure(derivaten) und Alkanolaminderivaten

wurden bereits angeführt. Es ist überraschend, daß die erfindungsgemäßen Esterpolyole unter Verwendung der tri- bzw. tetrafunktionellen Alkanolamine so glatt erfolgt und trotz der hohen Funktionalität der Produkte keine Vernetzung auftritt. Selbst bei niedrigen Umsetzungsverhältnissen von Dicarbonsäuren zu Trisalkanolaminen von 1,2 bis $<2$ tritt keine Vernetzung, sondern Oligomerenbildung, auf. Die Umsetzung zu den erfindungsgemäßen Estern hoher Funktionalität erfolgt bevorzugt im Verhältnis einer Carboxylgruppe bzw. Estergruppe zu 1 Mol Tris- oder Tetratrisalkanolaminen wie 1:0,55 bis 1,0, besonders bevorzugt 0,6 bis 1,0. Kleine Überschüsse an Tris- oder Tetraalkanolaminen, z.B. bis 1,5 Mol II oder III pro Carboxylgruppe, können verwendet werden, wobei die Überschüsse (bevorzugt im Vakuum) wieder abdestilliert werden könen.

Die Herstellung der Trialkanolamine (II) erfolgt z.B. durch Umsetzung von Ammoniak mit Ethylenoxid und Propylenoxid, wobei im Falle des bevorzugten Trialkanolamins a) die Synthese vorteilhaft aus dem technisch zugänglichen Diethanolamin und Propylenoxid oder aber auch aus Isopropanolamin und 2 Molen Ethylenoxid erfolgt.

Der technische Nutzen der erfindungsgemäßen Esterpolyole (I) liegt in ihrer hohen Funktionalität, ihrer vergleichsweise niedrigenViskosität, welche eine einfache Verarbeitung in kalt dosierbaren Verschäumungsapparaturen ermöglicht, ihrem autokatalytisch wirkenden Verhalten (die tertiären Aminogruppen in den Polyolen wirken auf die NCO-Umsetzungen katalytisch beschleunigend), sowie in ihrem sehr ausgeprägten Flammwidrigkeitsverhalten nach der Umsetzung im Isocyanat-Polyadditionsverfahren zu Hartschaumstoffen.

Während in Wasser- und Frigen®-getriebenen Polyurethan(harnstoff)-Hartschaumstoffen im allgemeinen noch Flammschutzmittel, wenn auch in reduzierten Mengen mitverwendet werden müssen, um zu ausreichender Flammfestigkeit (z.B. zu einem Brandverhalten nach DIN 4102 der Baustoffklasse B2) zu gelangen, ist es in den (wasserfrei) getriebenen Isocyanurat-Hartschaumstoffen nicht mehr notwendig, Flammschutzadditive mitzuverwenden, um das Prüfkriterium der DIN 4102/B2 zu erreichen. Die Kombination von Isocyanurat-Verschäumung und Verwendung der erfindungsgemäßen Esterpolyole (I) ergibt bereits ausgezeichnete Hartschaumstoffe, welche dem Flammschutzkriterium entsprechen und andererseits ein ausgezeichnetes Härteverhalten aufweisen. Man hat bisher Polyisocyanuratschaumstoffe (PIR-Schaumstoffe) aus Polyetherpolyolen oder einem Gemisch aus Polyether- und Polyesterpolyolen und überschüssigen Polyisocyanaten hergestellt, wobei der Isocyanatüberschuss katalytisch zur Isocyanuratgruppierung trimerisiert wird. Die Verwendung verschiedener Polyolkomponenten in diesen PIR-Schaumstoffen wird in der Regel nur dann gewählt, wenn bestimmte Flammschutznormen erfüllt werden müssen. Die üblichen Polyetherpolyole bzw. Polyesterpolyole zeigen jedoch typische Nachteile, so sind z.B. die Polyesterpolyole in der Regel zu hochviskos und zu niedrigfunktionell. Die Baustoffklassen B1 und B2 nach DIN 4102 werden in der Regel nur durch Gemische von Polyesterpolyolen sowie zusätzlicher Verwendung von Flammschutzmitteln vom Typ der Phosphorsäureester oder halogenartigen Verbindungen, die gegebenenfalls auch einbaufähig sein können, erzielt. Die nachteiligen Wirkungen dieser Rohstoffe oder Kombinationen, sowohl von zu hoher Viskosität und mangelnder Funktionalität wie auch im Verhalten beim Abbrennen flammschutzmittelhaltiger Kompositionen, werden durch die erfindungsgemäße Verwendung der Polyesterpolyole (I) umgangen.

Als Prüfkriterium für das Flammverhalten dient das Kleinbrennerverfahren gemäss DIN 4102. In diesem Prüfverfahren werden die vertikal eingespannten Proben der Grösse 90 × 190 × 10 mm in einem Brandkasten mit gewinkelt angeordnetem Brenner einer Kantenbeflammung und einer Flächenbeflammung von 15 sec ausgesetzt. Innerhalb von insgesamt 20 sec dürfen die Flammspitzen die 150 mm-Marke nicht überschreiten, damit eine Klassifizierung in die Brandklasse B2 vorgenommen werden kann.

Die erfindungsgemäßen Esterpolyole ermöglichen ein bemerkenswertes Unterschreiten dieser Meßmarke zur Einordnung in die Klasse B2, in Polyisocyanurat-Hartschaumstoffen sogar ohne sonstige Flammschutzzusätze, insbesondere auf Phosphor- und/oder Halogenbasis.

Ein weiteres Kriterium für die Schaumstoffgüte ist die erzielbare Härte, die eine Funktion der Vernetzungsdichte ist. Aussagen hierüber werden über die Eindringtiefe eines bestimmten Prüfkörpers in den Schaumstoff erhalten. Messungen hierzu erfolgen über die Eindringtiefe-Zeit-Kurve, welche in bestimmten Abständen, von der Startzeit an beginnend, aufgezeichnet wird.

Zur Herstellung von Polyurethanen, vorzugsweise Hartschaumstoffen auf Polyurethan(harnstoff)- bzw. Polyisocyanurat-Basis werden neben den erfindungsgemäßen Polyolen eingesetzt:

1. Aliphatische, cycloaliphatische, araliphatische, heterocyclische und besonders aromatische Polyisocyanate (einschließlich Diisocyanate), wie sie z.B. von W. Siefken in Justus Liebigs Annalen der Chemie, 562, Seiten 75-136, beschrieben werden, beispielsweise solche der Formel $Q(NCO)_n$, in der n = 2 bis 4, vorzugsweise 2 und Q einen aliphatischen Kohlenwasserstoffrest mit 2 bis 18, vorzugsweise 6 bis 12 C-Atomen, einen cycloaliphatischen Kohlenwasserstoffrest mit 4 bis 20, vorzugsweise 5 bis 11 C-Atomen, einen aromatischen Kohlenwasserstoffrest mit 6 bis 20, vorzugsweise 6 bis 13 C-Atomen, oder einen araliphatischen Kohlenwasserstoffrest mit 8 bis 15, vorzugsweise 8 bis 13 C-Atomen bedeuten, z.B. solche Polyisocyanate wie sie in der DE-A 2 832 253, Seiten 10-11, beschrieben werden. Besonders bevorzugt werden die technisch leicht zugänglichen Polyisocyanate, z.B. das 2,4- und/oder 2,6-Toluylendiisocyanat sowie beliebige Gemische dieser Isomeren («TDI»), Diphenylmethan-diisocyanate (4,4'- und/oder 2,4'- und/oder 2,2'-Isomere), Polyphenyl-polymethylenpolyisocyanate, wie sie durch Anilin-Formaldehyd-Kondensation und anschließende Phosgenierung hergestellt werden («rohes MDI») und «modifizierte Polyisocyanate», die z.B. Carbodiimidgruppen, Urethangruppen, Allophanatgruppen, Isocyanuratgruppen, Harnstoffgruppen und/oder Biuretgruppen aufweisen; insbesondere solche modifizierten Polyisocyanate und bevorzugt vom 4,4'- und/oder 2,4'- und/oder 2,2'-Diphenylmethandiisocyanat ableiten.

Werden nur zweifunktionelle höhermolekulare Verbindungen und gegebenenfalls nur zweifunktionelle weitere, niedermolekulare Kettenverlängerungsmittel verwendet, so setzt man bevorzugt modifizierte Polyisocyanate mit einer Funktionalität von mehr als 2,0 ein bzw. verwendet Tri- und/oder höherfunktionelle Polyisocyanate.

2. Ferner werden gegebenenfalls als Ausgangsmaterialien zur Polyurethanherstellung Verbindungen mit mindestens 2 gegenüber Isocyanaten reaktionsfähigen Wasserstoffatomen und einem Molekulargewicht von 18 bis 399 mitverwendet.

Auch in diesem Fall versteht man hierunter Hydroxylgruppen und/oder Aminogruppen und/oder Thiolgruppen und/oder Carboxylgruppen und/oder Hydrazidgruppen aufweisende Verbindungen, vorzugsweise Hydroxylgruppen und/oder Aminogruppen aufweisende Verbindungen, die als Kettenverlängerungsmittel oder Vernetzungsmittel dienen. Die Verbindungen weisen in der Regel 2 bis 8, vorzugsweise 2 bis 4, gegenüber Isocyanaten reaktionsfähige Wasserstoffatome auf. Beispiele werden hierfür in der DE-A 2 832 253, Seiten 19-20, beschrieben. Genannt seien hier beispielsweise Wasser, Hydrazin, Ethylenglykol, Butandiol-1,4, Neopentylglykol, Trimethylolpropan, Formit-Gemische oder Adipinsäuredihydrazid.

3. In untergeordneter Menge (bis ca. 45 Gew.-%, bezogen auf die erfindungsgemäßen Esterpolyole) als Co-Polyolkomponente Verbindungen mit mindestens zwei gegenüber Isocyanaten reaktionsfähigen Wasserstoffatomen von einem Molekulargewicht in der Regel von 400 bis 10 000.

Hierunter versteht man neben Aminogruppen, Thiogruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche vom Molekulargewicht 600 bis 6000, vorzugsweise 1500 bis 4000, vorzugsweise aber 2 bis 4 Hydroxylgruppen aufweisende Polyester, Polyether, Polythioether, Polyacetale, Polycarbonate und Polyesteramide, wie sie für die Herstellung von homogenen und zellförmigen Polyurethanen an sich bekannt sind und wie sie z.B. in der DE-A 2 832 253, Seiten 11-18, beschrieben werden. Besonders bevorzugt sind Polyether, die durch Addition von einem oder mehreren Alkylenoxiden (Ethylenoxid und besonders Propylenoxid) an zwei- oder mehrwertige «Starter» (Propylenglykol, Glycerin, Sorbit, Formose, Triethanolamin, Trimethylolpropan) erhalten werden, sowie Polyether, welche Polyadditionsprodukte aus Diisocyanaten und Hydrazin und/oder Diaminen und/oder Glykolen oder Polymerisate und/oder Pfropfpolymerisate, vorzugsweise aus Styrol und Acrylnitril dispergiert oder gelöst enthalten. Die bevorzugten Polyether haben dabei eine mittlere Funktionalität über 2,0.

4. Gegebenenfalls werden Hilfs- und Zusatzmittel wie leichtflüchtige anorganische, jedoch bevorzugt organische Substanzen als Treibmittel, Katalysatoren der an sich bekannten Art, wie tertiäre Amine, Zinn(II)- und Zinn(IV)-Verbindungen, oberflächenaktive Zusatzstoffe, wie Emulgatoren und Schaumstabilisatoren, Reaktionsverzögerer, z.B. sauer reagierende Stoffe wie Salzsäure oder organische Säurehalogenide, ferner Zellregler der an sich bekannten Art wie Paraffine, Fettalkohole oder Dimethylpolysiloxane oder funktionelle Silikonderivate, sowie Pigmente oder Farbstoffe der an sich bekannten Art, ferner Stabilisatoren gegen Alterungs-, Licht- und Witterungseinflüsse, Weichmacher und fungistatisch und bakteriostatisch wirkende Substanzen, sowie Füllstoffe zugesetzt. Diese gegebenenfalls mitzuverwendenden Hilfs- und Zusatzstoffe werden beispielsweise in der DE-A 2 732 292, Seiten 21-24, ausführlich beschrieben. Weitere Beispiele der Hilfs- und Zusatzmittel werden im Kunststoffhandbuch, Band VII, herausgegeben von Vieweg und Hoechtlen, Carl-Hanser-Verlag, München 1966, auf den Seiten 103-113, sowie im Kunststoffhandbuch Band VII, herausgegeben von Becker und Braun, Carl-Hanser-Verlag, München 1983 auf den Seiten 92-111, beschrieben.

Mit den erfindungsgemäßen Esterpolyolen hergestellte Hartschaumstoffe finden Verwendung als Dämmplatten, Sandwich-Elemente mit verschiedenen Deckschichten, als Ortschaum wie Spritzschaum oder nach dem Überschichtungsverfahren hergestellten Schaumstoffe mit hoher Tragfähigkeit, Sonnenkollektorfüllungen, Rohrisolierung, als Füll- und Montageschäume und/oder Blückschaumstoffe.

Ihre Herstellung erfolgt nach kontinuierlichen oder diskontinuierlichen Verfahren der Polyurethanverarbeitung wie z.B. Doppelbandtechnik, Spritz- oder Gießverfahren, mit Hoch- oder Niederdruck-Verschäumungsmaschinen.

*Beispiele*

*A) Herstellung der Esterpolyole I*

*Beispiel 1*

Esterpolyol aus 217 g (1,25 mol) Adipinsäuredimethylester und 443 g (2,5 mol) Bis-(2-hydroxypropyl)-hydroxyethylamin sowie 0,1 ml Titan-Tetrabutyltitanat durch übliche Umesterungsreaktion unter Abdestillieren von Methanol (10-15 Stunden bei 130 bis 157°C) unter Stickstoff und anschließendes Anlegen von Vakuum bei 100-140°C. MV (Molverhältnis Dicarbonsäure(derivat):Trialkanolamin) = 1:2,0.

| | | |
|---|---|---|
| Ausbeute | : | 580 g, quantitativ |
| OH-Zahl | : | 475 |
| Säurezahl | : | 0,9 |
| Viskosität | : | 6630 mPa.s bei 25°C |

Beispiel 2

Esterpolyol aus 4800 g (29,7 mol) Bis-(2-hydroxyethyl)-2-hydroxypropylamin und 2560 g (14,7 mol) Adipinsäuredimethylester und 0,2 ml Titan-Tetrabutyltitanat durch Abdestillation von Methanol unter $N_2$ und Anlegen von Vakuum bei 100-140°C. MV = 1:2,02.

Ausbeute : 6400 g, fast quantitativ
OH-Zahl : 488
Säurezahl : 1,2
Viskosität : 800 mPa.s bei 25°C

*Beispiel 3* (Vergleich)

Esterpolyol aus 194 g (1 mol) Phthalsäuredimethylester und 326 g (2 mol) Bis-(2-hydroxyethyl)-2--hydroxypropylamin sowie 0,1 ml Tetrabutyltitanat unter $N_2$ durch Abdestillieren von Methanol bei 100-140°C. MV = 1:2,0.

Ausbeute : 450 g, quantitativ
OH-Zahl : 480

Das Polyesterpolyol ist infolge seiner aromatischen Reste Z bei RT nicht fließfähig.

*Beispiel 4*

Esterpolyol aus 174 g (1 mol) Bernsteinsäurediethylester und 326 g (2 mol) Bis-(2-hydroxyethyl)--2-hydroxypropylamin durch Abdestillieren von Ethanol bei 100-140°C unter $N_2$ und Anlegen von Vakuum. MV = 1:2.

Ausbeute : 430 g, quantitativ
OH-Zahl : 500
Viskosität : 1250 mPa.s bei 25°C

*Beispiel 5* (Vergleich)

Esterpolyol aus 696 g (4 mol) Adipinsäuredimethylester und 1192 g (8 mol) Triethanolamin durch Abdestillieren von Methanol bei 100-150°C unter $N_2$ und Anlegen von Vakuum. MV = 1:2.

Ausbeute : 1630 g, hellgelb
OH-Zahl : 547
Säurezahl : 1,0
Viskosität : 3830 mPa.s bei 25°C

*Beispiel 6*

Esterpolyol aus 396 g (3 mol) Malonsäuredimethylester und 978 g (6 mol) Bis-(2-hydroxyethyl)-2--hydroxypropylamin durch Abdestillieren von Methanol bei 100-180°C unter $N_2$ und Anlegen von Vakuum. MV = 1:2.

Ausbeute : 1150 g, quantitativ
OH-Zahl : 650
Viskosität : 3300 mPa.s bei 25°C

*Beispiel 7*

Esterpolyol aus 288 g (2 mol) Maleinsäuredimethylester und 708 g (4 mol) Bis(2-hydroxyethyl)-2--hydroxypropylamin bei 80-140°C unter Abdestillieren von Methanol unter $N_2$ und Anlegen von Vakuum. MV = 1:2.

Ausbeute : 870 g, quantitativ
OH-Zahl : 500
Viskosität : 6300 mPa.s bei 25°C

*Beispiel 8*

Esterpolyol aus 960 g (6 mol) Glutarsäuredimethylester und 1956 g (12 mol) Bis-(2-hydroxyethyl)--2-hydroxypropylamin durch Abdestillieren von Methanol bei 140-160°C unter $N_2$ und Anlegen von Vakuum. MV = 1:2.

Ausbeute : 2520 g, quantitativ
OH-Zahl : 515
Viskosität : 5480 mPa.s bei 25°C

*Beispiel 9*

Esterpolyol aus 7300 g (50 mol) Adipinsäure und 16 300 g (100 mol) Bis-(2-hydroxyethyl)-2-hydroxypropylamin durch übliche Veresterungsreaktion unter $N_2$ bei 140-180°C ca. 8 Stunden durch Abdestillieren von Wasser und anschließendes Anlegen von Vakuum. MV = 1:2.

Ausbeute : 21 800 g, hellgelbes Öl
OH-Zahl : 505
Viskosität : 6200 mPa.s bei 25°C

*Beispiel 10*

Esterpolyol aus 10,05 kg (75 mol) technischer Glutarsäure (bestehend aus 50% Glutarsäure, 25% Adipinsäure, 25% Bernsteinsäure) und 24,45 kg (150 mol) Bis-(2-hydroxyethyl)-2-hydroxypropylamin bei 140-180°C unter $N_2$ durch Abdestillieren von Wasser und Anlegen von Vakuum.

Ausbeute : 31,2 kg
OH-Zahl : 467
Viskosität : 11 750 mPa.s bei 25°C

*Beispiel 11*

Oligo-Esterpolyol aus 292 g (2 mol) Adipinsäure und 489 g (3 mol) Bis-(2-hydroxyethyl)-2-hydroxypropylamin durch Abdestillieren von Wasser unter $N_2$ bei 130-190°C und Anlegen von Vakuum. MV = 1:1,5.

Ausbeute : 700 g, quantitativ
OH-Zahl : 360
Viskosität : 19 000 mPa.s bei 25°C

*Beispiel 12*

Oligo-Esterpolyol aus 264 g (2 mol) technischer Glutarsäure und 489 g ( 3 mol) Bis-(2-hydroxyethyl)--2-hydroxypropylamin durch Abdestillieren von Wasser unter $N_2$ bei 130-180# °C unter Anlegen von Vakuum. MV = 1:1,5.

Ausbeute : 680 g, quantitativ
OH-Zahl : 341
Viskosität : 59 000 mPa.s bei 25°C

*Beispiel 13*

Oligo-Esterpolyol aus 145 g (1 mol) Adipinsäure und 203,8 g (1,25 mol) Bis-(2-hydroxyethyl)-2-hydroxypropylamin durch Abdestillieren von Wasser bei 155°C unter $N_2$ und Anlegen von Vakuum. MV = 1:1,25.

Ausbeute : 313 g, quantitativ
OH-Zahl : 298
Viskosität : 90 000 mPa.s bei 25°C

*Beispiel 14*

Oligo-Esterpolyol aus 1,98 g (15 mol) technischer Glutarsäure und 2,79 g (23,25 mol) Bis-(2-hydroxyethyl)-2-hydroxypropyl-amin durch Abdestillieren von Wasser unter $N_2$ bei 150-160°C und Anlegen von Vakuum. MV = 1:1,55.

Ausbeute : 5,2 g, quantitativ
OH-Zahl : 360
Viskosität : 39 000 mPa.s bei 25°C

*Beispiel 15*

Oligo-Esterpolyol aus 1,98 kg (15 mol) technischer Glutarsäure und 3,91 kg (24 mol) Bis-(2-hydroxyethyl)-2-hydroxypropyl-amin durch Abdestillieren von Wasser unter $N_2$ bei 150-180°C und Anlegen von Vakuum. MV = 1:1,6.

Ausbeute : 5,35 kg, quantitativ
OH-Zahl : 407
Viskosität : 18 800 mPa.s bei 25°C

*Beispiel 16*

Oligo-Esterpolyol aus 1,98 kg (15 mol) technischer Glutarsäure und 4,155 kg (25,5 mol) Bis-(2--hydroxyethyl)-2-hydroxypropyl-amin durch Abdestillieren von Wasser unter $N_2$ bei 150-180°C und Anlegen von Vakuum. MV = 1:1,7.

Ausbeute : 5,59 kg, quantitativ
OH-Zahl : 430
Viskosität : 13 950 mPa.s bei 25°C

*Beispiel 17*

Esterpolyol aus 720 g (5 mol) Adipinsäure, 855 g (5 mol) Bis-(2-hydroxpropyl)-hydroxyethyl-amin und 745 g (5 mol) Triethanolamin durch Abdestillieren von Wasser unter $N_2$ bei 100-150°C und Anlegen von Vakuum. MV = 1:2,0.

Ausbeute : quantitativ
OH-Zahl : 484
Viskosität : 19 000 mPa.s bei 25°C

*Beispiel 18*

Esterpolyol aus 720 g (5 mol) Adipinsäure, 815 g (5 mol) Bis-(2-hydroxyethyl)-2-hydroxypropyl-amin und 885 g (5 mol) Bis-(2-hydroxpropyl)-2-hydroxyethyl-amin durch Abdestillieren von Wasser unter $N_2$ bei 110-160°C und Anlegen von Vakuum. MV = 1:2,0.

Ausbeute : praktisch quantitativ
OH-Zahl : 488
Viskosität : 8850 mPa.s bei 25°C

*B) Herstellung von Hartschaumstoffen nach dem Isocyanat-Polyadditionsverfahren*

*B1) Polyurethan- bzw. Polyurethan(harnstoff)-Hartschaumstoffe*

Es wurden jeweils die in den Tabellen angegebenen Polyester- und Polyethertypen manuell verschäumt, wobei die Rohstoffe zunächst innig untereinander vermischt wurden und nach Zugabe der aufgeführten Isocyanatmenge noch 10-15 sec verrührt und dann in eine offene oder verschließbare Form gegossen wurden.

Es entstehen freie Schaumstoffe der Abmessung 30 x 30 x 30 cm bzw. verdichtete Schaumstoffplatten der Abmessung 30 x 30 x 6 cm. Zur Bestimmung der Brandstoffklasse gemäß DIN 4102 wurden normengerechte Prüfkörper der Größe 190 x 90 x 10 mm verwendet. In einigen Fällen wurde die Länge größer gewählt, die 190 mm Marke jedoch gekennzeichnet, um ein schlechtes Brandverhalten voll zu erfassen.

*Ausgangsrohstoffe*

Als Isocyanat wurde ein handelsübliches Polyphenyl-polymethylen-polyisocyanat (Desmodur® V 20/ BAYER-AG, D-5090 Leverkusen), das durch Phosgenierung eines Anilin-Formaldehyd-Kondensates erhalten wurde und einen NCO-Gehalt von 31 Gew.-% aufweist, verwendet.

*Vergleichspolyester 1*

Handelsübliches, leicht trifunktionalisiertes Polyesterpolyol aus Adipinsäure, Phthalsäure, Glycerin und Propylenglykol der OH-Zahl 210 (Desmophen 2450 X, BAYER-AG).

*Vergleichspolyester 2*

Handelsübliches Polyesterpolyol aus Adipinsäure, Phthalsäure und Diethylenglykol der OH-Zahl 200 (Desmophen PEP 53 D, BAYER-AG).

*Vergleichspolyester 3*

Handelsübliches Polyesterpolyol aus Phthalsäure, Diethylenglykol und Ethylenglykol der OH-Zahl 290 (Desmophen VP-PU 1431 BAYER-AG).

*Vergleichspolyether 1*

Handelsübliches Polyetherpolyol aus Ethylendiamin und Proyplenoxid der OH-Zahl 470 (Desmophen 4051-B, BAYER-AG).

*Vergleichspolyether 2*

Polyetherpolyol auf Basis Sucrose und Propylenoxid der OH-Zahl 460.

TABELLE 1

| Rohstoffe | Gewichtsteile in Rezeptur | | | | | |
|---|---|---|---|---|---|---|
| | a *) | b *) | c *) | d *) | e | f |
| Vergleichspolyether 2 | 100 | 20 | 20 | 20 | 20 | 20 |
| Vergleichspolyester 3 | — | 80 | — | — | — | — |
| Vergleichspolyester 1 | — | — | 80 | — | — | — |
| Vergleichspolyester 2 | — | — | — | 80 | — | — |
| Erfindungsgemäßes Esterpolyol 9 | — | — | — | — | 80 | — |
| Erfindungsgemäßes Esterpolyol 10 | — | — | — | — | — | 80 |

TABELLE 1 (Fortsetzung)

| Rohstoffe | Gewichtsteile in Rezeptur | | | | | |
|---|---|---|---|---|---|---|
| | a *) | b *) | c *) | d *) | e | f |
| Stabilisator AC 3278 der BAYER AG | 1,8 | 1,8 | 1,8 | 1,8 | 1,8 | 1,8 |
| Wasser | 2,1 | 2,1 | 2,1 | 2,1 | 2,1 | 2,1 |
| Aktivator Desmorapid® 726 b (BAYER AG) | 3,0 | 1,0 | 1,9 | 0,9 | 0,5 | 0,5 |
| Treibmittel (Monofluortrichlormethan) | 44 | 44 | 44 | 44 | 44 | 44 |
| Isocyanatmenge | 159 | 123 | 106 | 105 | 166 | 158 |
| Kennzahl | 110 | 110 | 110 | 110 | 110 | 110 |
| Liegezeit (sec) | 17 | 28 | 19 | 20 | 20 | 21 |
| Abbindezeit (sec) | 85 | 84 | 80 | 83 | 81 | 82 |
| Oberfläche | zäh | zäh | zäh | zäh | zäh | zäh |
| Aushärtung nach | 4'30" | 10'20" | 11'49" | 13'30" | 5'0" | 6'10" |
| Rohdichte (kg/m$^3$) | 20 | 19 | 20 | 19 | 21 | 20 |

*) Versuche a-d) sind Vergleichsversuche.

Die Aushärtung wurde nach einem manuellen Meßverfahren bestimmt, weshalb die Werte nur relativ zueinander interpretiert werden können.

TABELLE 2

| Rohstoffe | Gewichtsteile in Rezeptur | | | |
|---|---|---|---|---|
| | a | b | c | d |
| Vergleichspolyether 2 | 45 | — | — | — |
| Vergleichspolyether 1 | 54 | — | — | — |
| Vergleichspolyester 1 | — | 100 | — | — |
| Erfindungsgemäßes Esterpolyol 7 | — | — | 100 | — |
| Erfindungsgemäßes Esterpolyol 9 | — | — | — | 100 |
| Flammschutzmittel Disflamoll TCA der Bayer AG | 20 | 20 | 20 | 20 |
| Polyurax SR 242 (Emulgator der BP) | 1,5 | 1,5 | 1,5 | 1,5 |
| Treibmittel (Monofluortrichlormethan) | 33 | 33 | 33 | 33 |
| Aktivator Desmorapid® 726 b (Bayer AG) | — | 0,8 | 0,6 | — |
| Isocyanatmenge | 122 | 56 | 131 | 131 |
| Kennzahl | 110 | 110 | 110 | 110 |
| Liegezeit (sec) | 50 | 42 | 43 | 60 |
| Abbindezeit (sec) | 150 | 151 | 159 | 130 |
| Oberfläche | zäh | zäh | zäh | zäh |
| Schrumpf | — | stark | — | — |
| Rohdichte (kg/m$^3$) | 37 | *) | 39 | 38 |
| Aushärtung nach | 5'30" | *) | 5'10" | 6'20" |

*) Werte wegen zu starker Schrumpfneigung nicht zu ermitteln.

TABELLE 3

| Rohstoffe | Gewichtsteile in Rezeptur | | | | | | |
|---|---|---|---|---|---|---|---|
| | a **) | b **) | c | d | e | f | g |
| Vergleichspolyester 1 | 65 | — | — | — | — | — | — |
| Vergleichspolyether 2 | — | 29,3 | — | — | — | — | — |
| Vergleichspolyether 1 | — | 35,7 | — | — | — | — | — |
| Erfindungsgemäßes Beispiel 6 | — | — | 65 | — | — | — | — |
| Erfindungsgemäßes Beispiel 7 | — | — | — | 65 | — | — | — |
| Erfindungsgemäßes Beispiel 8 | — | — | — | — | 65 | — | — |
| Erfindungsgemäßes Beispiel 9 | — | — | — | — | — | 65 | — |
| Erfindungsgemäßes Beispiel 10 | — | — | — | — | — | — | 65 |
| Desmophen® 4090 N (Bayer AG) | 15 | 15 | 15 | 15 | 15 | 15 | 15 |
| Disflamoll® TCA (Bayer AG) | 20 | 20 | 20 | 20 | 20 | 20 | 20 |

TABELLE 3 (Fortsetzung)

| Rohstoffe | Gewichtsteile in Rezeptur | | | | | | |
|---|---|---|---|---|---|---|---|
| | a **) | b **) | c | d | e | f | g |
| Polyurax SR 242 | | | | | | | |
| Emulgator der BP) | 1,5 | 1,5 | 1,5 | 1,5 | 1,5 | 1,5 | 1,5 |
| Desmorapid® 726 b (Bayer AG) | 1,0 | 0,3 | 0,8 | 0,8 | 0,1 | — | — |
| Treibmittel (Monofluortrichlormethan) | 27,4 | 27,4 | 27,4 | 27,4 | 27,4 | 27,4 | 27,4 |
| Isocyanatmenge | 55,5 | 100,3 | 131,2 | 105,2 | 109 | 116,5 | 100 |
| Kennzahl | 110 | 110 | 110 | 110 | 110 | 110 | 110 |
| Schrumpf | stark | — | — | — | — | — | — |
| Rohdichte (kg/m³) | nicht meßbar | 38 | 40,7 | 36,6 | 38,7 | 35,8 | 37,9 |
| Brandtest nach DIN 4102 | | | | | | | |
| Kantenbeflammung (mm) | * | 200 | 127 | 135 | 107 | 103 | 103 |
| Flächenbeflammung (mm) | * | 180 | 122 | 143 | 103 | 103 | 105 |

*) nicht vermessen; schrumpft bereits beim Herstellen.
**) Vergleich.

Aus der Tabelle 3 geht hervor, daß die erfindungsgemäßen Esterpolyole im Brandtest nach DIN 4102 gebräuchlichen Polyether-Kombinationen (Beispiel b) überlegen sind, während übliche Polyester alleine (Beispiel a) keine verwertbaren Hartschaumstoffe ergeben.

Der für die Baustoffklasse B 2 erforderliche Wert von 150 mm Flammlänge wird durch Verwendung der erfindungsgemäßen Esterpolyole merklich unterschritten (bei Mitverwendung von Flammschutzmittel Disflamoll TCA).

Ähnliche Ergebnisse werden mit dem einbaufähigen Flammschutzmittel Baytherm® 4090 als alleinige Flammschutzkomponente erhalten, die in Tabelle 4 aufgeführt sind.

TABELLE 4

| Rohstoffe | Gewichtsteile in Rezeptur | | | | | | | |
|---|---|---|---|---|---|---|---|---|
| | a **) | b **) | c | d | e | f | g | h |
| Vergleichspolyester 1 | 80 | — | — | — | — | — | — | — |
| Vergleichspolyether 2 | — | 36 | — | — | — | — | — | — |
| Vergleichspolyether 1 | — | 44 | — | — | — | — | — | — |
| Erfindungsgemäßes Beispiel 4 | — | — | 80 | — | — | — | — | — |
| Erfindungsgemäßes Beispiel 6 | — | — | — | 80 | — | — | — | — |
| Erfindungsgemäßes Beispiel 7 | — | — | — | — | 80 | — | — | — |
| Erfindungsgemäßes Beispiel 8 | — | — | — | — | — | 80 | — | — |
| Erfindungsgemäßes Beispiel 9 | — | — | — | — | — | — | 80 | — |
| Erfindungsgemäßes Beispiel 10 | — | — | — | — | — | — | — | 80 |
| Baytherm® 4090 N (Bayer AG) | 20 | 20 | 20 | 20 | 20 | 20 | 20 | 20 |
| Polyurax SR 242 (Emulgator der BP) | 1,0 | 1,0 | 1,0 | 1,0 | 1,0 | 1,0 | 1,0 | 1,0 |
| Desmorapid® 726 b (Bayer AG) | 1,25 | 0,3 | — | 0,8 | 0,8 | 0,1 | — | — |
| Treibmittel (Monofluortrichlormethan) | 27 | 27 | 27 | 27 | 27 | 27 | 27 | 27 |
| Isocyanatmenge | 68,8 | 122,5 | 125 | 161 | 129,3 | 134 | 130,4 | 123 |
| Kennzahl | 110 | 110 | 110 | 110 | 110 | 110 | 110 | 110 |
| Schrumpf | stark | — | — | — | — | — | — | — |
| Rohdichte (kg/m³) | | 38 | 37 | 39 | 39 | 38 | 37 | 38 |
| Brandtest nach DIN 4102 | | | | | | | | |
| Kantenbeflammung (mm) | *) | >200 | 115 | 143 | 143 | 133 | 128 | 128 |
| Flächenbeflammung (mm) | *) | 180 | 97 | 87 | 143 | 130 | 123 | 125 |

*) nicht vermessen, Schrumpf
**) Vergleich

Auch hier zeigt sich wieder die Überlegenheit der erfindungsgemäßen Polyester.

TABELLE 5

| Rohstoffe | Gewichtsteile in Rezeptur | | | | | | | | | |
|---|---|---|---|---|---|---|---|---|---|---|
| | a **) | b **) | c | d | e | f | g | h | i | j |
| Vergleichspolyester 1 | 100 | — | — | — | — | — | — | — | — | — |
| Vergleichspolyether 2 | — | 45 | — | — | — | — | — | — | — | — |
| Vergleichspolyether 1 | — | 55 | — | — | — | — | — | — | — | — |
| Erfindungsgemäßes Beispiel 1 | — | — | 100 | — | — | — | — | — | — | — |
| Erfindungsgemäßes Beispiel 6 | — | — | — | 100 | — | — | — | — | — | — |
| Erfindungsgrmäßes Beispiel 7 | — | — | — | — | 100 | — | — | — | — | — |
| Erfindungsgemäßes Beispiel 8 | — | — | — | — | — | 100 | — | — | — | — |
| Erfindungsgemäßes Beispiel 9 | — | — | — | — | — | — | 100 | — | — | — |
| Erfindungsgemäßes Beispiel 10 | — | — | — | — | — | — | — | 100 | — | — |
| Erfindungsgemäßes Beispiel 11 | — | — | — | — | — | — | — | — | 100 | — |
| Erfindungsgemäßes Beispiel 12 | — | — | — | — | — | — | — | — | — | 100 |
| Disflamoll®TCA (Bayer AG) | 20 | 20 | 20 | 20 | 20 | 20 | 20 | 20 | 20 | 20 |
| Polyurax SR 242 (Emulgator der BP) | 1,5 | 1,5 | 1,5 | 1,5 | 1,5 | 1,5 | 1,5 | 1,5 | 1,5 | 1,5 |
| Desmorapid® 726 b (Bayer AG) | 0,8 | — | 2,8 | 0,6 | 0,6 | 0,6 | — | 0,05 | 0,1 | 0,1 |
| Treibmittel (Monofluortrichlormethan | 32,8 | 32,8 | 32,8 | 32,8 | 32,8 | 32,8 | 32,8 | 32,8 | 32,8 | 32,8 |
| Isocyanatmenge | 56,3 | 122 | 127,6 | 171,6 | 131,5 | 135,4 | 131,4 | 123,9 | 95,6 | 90,5 |
| Kennzahl | 110 | 110 | 110 | 110 | 110 | 110 | 110 | 110 | 110 | 110 |
| Schrumpf | stark | — | — | — | — | — | — | — | — | — |
| Rohdichte (kg/m$^3$) | — | 37 | 37 | 39 | 39 | 38 | 35 | 37 | 38 | 38 |
| Brandtest nach DIn 4102 | | | | | | | | | | |
| Kantenbeflammung (mm) | *) | 200 | 175 | 148 | 148 | 135 | 122 | 122 | 123 | 123 |
| Flächenbeflammung (mm) | *) | 185 | 115 | 137 | 147 | 125 | 100 | 102 | 100 | 100 |

*) nicht gemessen; Schrumpf **) Vergleich

Auch in dieser Tabelle zeigt sich die Überlegenheit der erfindungsgemäßen Polyester.
Aus dem Beispiel c geht hervor, daß Polyesterpolyole mit 2 sekundären OH-Gruppen denen mit einer sekundären OH-Gruppe pro Estergruppe jedoch unterlegen sind.

TABELLE 6

| Rohstoffe | Gewichtsteile in Rezeptur | | | | | |
|---|---|---|---|---|---|---|
| | a **) | b **) | c | d | e | f |
| Vergleichspolyester 1 | 100 | — | — | — | — | — |
| Vergleichspolyether 2 | — | 45 | — | — | — | — |
| Vergleichspolyether 1 | — | 55 | — | — | — | — |
| Erfindungsgemäßer Ester 9 | — | — | 100 | — | — | — |
| Erfindungsgemäßer Ester 10 | — | — | — | 100 | — | — |
| Erfindungsgemäßer Ester 11 | — | — | — | — | 100 | — |
| Erfindungsgemäßer Ester 12 | — | — | — | — | — | 100 |
| Disflamoll®TCA (Bayer AG) | 20 | 20 | 20 | 20 | 20 | 20 |
| $H_2O$ | 1,2 | 1,2 | 1,2 | 1,2 | 1,2 | 1,2 |
| Polyurax SR 242 (Emulgator der BP) | 1,5 | 1,5 | 1,5 | 1,5 | 1,5 | 1,5 |
| Desmorapid® 726 b (Bayer AG) | 0,8 | — | — | 0,06 | 0,1 | — |
| Treibmittel (Monofluortrichlormethan) | 46,6 | 46,6 | 39,2 | 39,2 | 39,2 | 39,2 |
| Isocyanatmenge | 78,2 | 143,7 | 156 | 147 | 113 | 108 |
| Kennzahl | 110 | 110 | 110 | 110 | 110 | 110 |
| freie Rohdichte (kg/m$^3$) | — | 28 | 28 | 28 | 28 | 28 |
| Schrumpf | stark | — | — | — | — | — |
| Brandtest nach DIN 4102 | | | | | | |
| Kantenbeflammung | * | >200 | 100 | 105 | 114 | 123 |
| Flächenbeflammung | * | 178 | 94 | 95 | 95 | 95 |

*) nicht gemessen; Schrumpf **) Vergleich

Tabelle 6 zeigt die Überlegenheit der erfindungsgemäßen Ester im bevorzugten OH-Zahlbereich.
Zur Bestimmung des Brandverhaltens wurden die Schaumstoffe auf 40 kg/m$^3$ verdichtet.

Aus den Beispielen der Tabelle 1 mit den Rezepturen e und f geht hervor, daß die Verwendung der erfindungsgemäßen Esterpolyole zu einer wesentlichen Verbesserung des Aushärteverhaltens gegenüber gängigen Standardpolyesterpolyolen führt. In der Praxisanwendung ist daher das Arbeiten mit kürzerer Entformungszeit möglich.

Zur besseren Vergleichbarkeit der Aushärtezeiten wurden die Schaumstoffe auf gleiche Abbindezeiten eingestellt. Das autokatalytische Reaktionsverhalten der erfindungsgemäßen Polyesterpolyole geht aus den stark reduzierten Aktivatormengen hervor (Tabelle 1e-f, 2d, 3e-g, 4f-h, 5d-j, 6c-f).

Das Brandverhalten dieser Esterpolyole ist in den Tabellen 3-6 aufgeführt.

Daraus geht hervor, daß

1. die verwendeten (Vergleichs-)Polyetherpolyole auch bei Einsatz größerer Mengen an Flammschutzmitteln (Tabelle 3b, 4b, 5b, 6b) keine Schaumstoffe ergeben, die der Baustoffklasse B2 entsprechen,
2. der ausschließliche Einsatz von Vergleichs-Standardpolyesterpolyolen auch in Kombination mit Flammschutzmitteln nicht zu Schaumstoffen der erforderlichen Güte führt (Tabelle 3a, 4a, 5a, 6a),
3. hingegen die Verwendung der erfindungsgemäßen Esterpolyole sowohl in Kombination mit einbaufähigen als auch nicht einbaufähigen Flammschutzmitteln Schaumstoffe guter Qualität ergeben, die die Anforderung der Baustoffklasse B2 nach DIN 4102 sicher erfüllen, wobei die Esterpolyole, welche aus Trialkanolaminen mit einer sekundären Hydroxygruppe und guter Frigen®-Verträglichkeit gegenüber dem Trialkanolamin mit zwei sekundären Hydroxygruppen wesentlich besseres Brandverhalten zeigen; aus Gründen der Flammwidrigkeit und der Treibmittelverträglichkeit gilt daher:

| | Alkanolamin für die Veresterung | Flammwidrigkeit | Treibmittelverträglichkeit |
|---|---|---|---|
| 1. | $CH_2-CH_2-OH$<br>$HO-CH_2-CH_2-N$<br>$CH_2-CH_2-OH$ | *) | — |
| 2. | $CH_2-CH_2-OH$<br>$HO-CH-CH_2-N$<br>I $CH_2-CH_2-OH$<br>$CH_3$ | + | + |
| 3. | $CH_2-CH_2-OH$<br>$HO-CH-CH_2-N$<br>I $CH_2-CH-OH$<br>$CH_3$ I<br>$CH_3$ | — | + |

*) diese Ester wurden wegen mangelnder Treibmittelverträglichkeit (Lagerstabilität der Polyesterformulierung) nicht in die Branduntersuchungen aufgenommen.

Das Optimum liegt daher bei Verwendung von Trisalkanolamin 2) für die Esterherstellung bzw. Verschäumung.

*B2) Verwendung der erfindungsgemäßen Polyole zur Herstellung von Polyisocyanurat-Hartschaumstoffen*

Es wurden jeweils die in den Tabellen angegebenen Polyether- und Polyestertypen manuell verschäumt, wobei die Rohstoffe zunächst innig und nach Zugabe der Isocyanatmenge für 10 sec bei einer Rührzahl von 4000 Upm verrührt und dann in eine offene oder verschließbare Form gegossen wurden.

Das Brandverhalten wurde nach DIN 4102 geprüft. Die Eindringtiefe als Maß für die Aushärtung des Hartschaumstoffes wurde durch Aufsetzen eines Stempels vom Durchmesser 3,6 cm und einem Druck von 1,7 kp $cm^{-2}$ auf die Blöcke der Grösse 20 × 20 × 20 cm bestimmt, und zwar 6 und 10 Minuten nach der Startzeit.

*Ausgangsstoffe*

Als Isocyanat wurde ein handelsübliches Polyphenyl-polymethylen-polyisocyanat, das durch Phosgenierung eines Anilin-Formaldehyd-Kondensates erhalten wurde und einen NCO-Gehalt von 31 Gew.-% aufweist, verwendet (Desmodur 44 V 70, BAYER-AG).

*Vergleichspolyester*

Bifunktionelles Polyesterpolyol aus Phthalsäure, Adipinsäure und Diethylenglykol der OH-Zahl 200 (Desmophen®-PEP 53-D, BAYER-AG).

*Vergleichspolyether*

Handelsübliches Polyetherpolyol auf Basis Sucrose-Propylenglykol-Propylenoxid der OH-Zahl 470 (Desmophen 4034-B, BAYER-AG).

TABELLE 7

| Rohstoffe | Gewichtsteile in Rezeptur | | | | | |
|---|---|---|---|---|---|---|
| | a *) | b | c | d | e | f *) |
| Polyether (Vergleichs-) | 60 | 60 | 60 | 60 | 60 | 60 |
| Polyester (Vergleichs-) | 20 | — | — | — | — | 40 |
| Erf.-gem. Esterpolyol 9 | — | 20 | — | 40 | — | — |
| Erf.-gem. Esterpolyol 10 | — | — | 20 | — | 40 | — |
| Flammschutzmittel Diphenylkresylphosphat | 20 | 20 | 20 | 20 | 20 | 20 |
| Stabilisator B 8404 der Fa. Goldschmidt | 1,0 | 1,0 | 1,0 | 1,0 | 1,0 | 1,0 |
| Aktivator Desmoraid® 726 b der Bayer AG | 0,5 | 0,5 | 0,5 | 0,5 | 0,5 | 0,5 |
| Treibmittel (Monofluortrichlormethan) | 40 | 38 | 38 | 40 | 40 | 40 |
| Isocyanat-Menge | 200 | 200 | 200 | 200 | 200 | 200 |
| 25%iges Kaliumacetat in Diethylenglykol | 2,0 | 2,0 | 2,0 | 2,0 | 2,0 | 2,0 |
| (Isocyanuratisierungs-Katalysator) NCO-Kennzahl | 222 | 220 | 217 | 175 | 172 | 177 |
| Startzeit (Abb.-Zeit [sec]) | 20/58 | 20/58 | 20/56 | 19/54 | 21/56 | 21/53 |
| Rohdichte (kg/m$^3$) | 38,1 | 39,8 | 39,6 | 40,4 | 41,4 | 40,6 |
| Brandverhalten DIN 4102 | | | | | | |
| (erreichte Baustoffklasse) | B2 | B2 | B2 | B2 | B2 | B3 |
| Flammenhöhe (mm) | 110 | 110 | 110 | 120 | 120 | 150 |
| Eindringtiefe (mm): | | | | | | |
| Stempel 3,6 cm ∅, p = 1,75 kp/cm$^2$ | | | | | | |
| nach 6 min | 3,6 | 1,7 | 1,5 | 2,0 | 1,9 | 5,3 |
| nach 10 min | 3,9 | 2,1 | 1,9 | 2,5 | 2,3 | 6,0 |

*) Vergleichsversuche ohne Zusatz der erfindungsgemäßen Esterpolyole.

Die Tabelle 7 zeigt, daß das Brandverhalten der Polyisocyanurat-Schaumstoffe verbessert wird; dies geht mit den reduzierten Flammenhöhen in den Beispielen b bis e) einher.

Aber auch die Aushärtungsgeschwindigkeit wird deutlich verbessert. Die Eindruckhärten der erfindungsgemäßen Beispiele wird gegenüber den Vergleichswerten a und f um den Faktor 2 angehoben, d.h., es können kürzere Entformungszeiten und damit größere Produktionsgeschwindigkeiten erzielt werden. Beispielsweise sind hiermit Dachkonstruktionen aus Polyisocyanurat-Hartschaumstoffen besser belastbar.

Die folgende Tabelle 8 zeigt, daß mit den erfindungsgemäßen Esterpolyolen sogar die Bauklasse B2 *ohne* Flammschutzmittelzusätze erreicht wird.

TABELLE 8

| Rohstoffe | Gewichtsteile in Rezeptur | | | |
|---|---|---|---|---|
| | a | b | c | d |
| Erf.-gem. Esterpolyol 9 | 100 | — | — | — |
| Erf.-gem. Esterpolyol 10 | — | 100 | — | — |
| Erf.-gem. Esterpolyol 14 | — | — | 100 | — |
| Erf.-gem. Esterpolyol 15 | — | — | — | 100 |
| Flammschutzmittel Diphenylkresylphosphat | ohne | ohne | ohne | ohne |
| Stabilisator B 8404 der Fa. Goldschmidt | 1,0 | 1,0 | 1,0 | 1,0 |
| Aktivator Desmorapid 726 b der Bayer AG | 0,5 | 0,5 | 0,5 | 0,5 |
| 15%iges Kaliumacetat in Diethylenglykol | 2,0 | 2,0 | 2,0 | 2,0 |
| Treibmittel Monofluortrichlormethan | 42 | 42 | 37 | 40 |
| Isocyanatmenge | 230 | 222 | 190 | 295 |
| Kennzahl | 200 | 200 | 200 | 200 |
| Rohdichte (kg/m$^3$) | 41,7 | 39,7 | 44,3 | 39,9 |
| Startzeit (Abb.-Zeit [sec]) | 25/46 | 25/49 | 25/42 | 23/41 |
| Brandverhalten DIN 4102 | B2 | B2 | B2 | B2 |
| Flammenhöhe [mm] | 100 | 100 | 100 | 100 |

Die Ergebnisse des Brandverhaltens zeigen eindrucksvoll, daß die Marke der Baustoffklasse B2 in allen Fällen durch die erfindungsgemäßen Esterpolyole *ohne* übliche Flammschutzmittel merklich unterschritten werden.

Diese Esterpolyole stellen daher wertvolle Bausteine für das Isocyanat-Polyadditionsverfahren dar, besonders jedoch zur Herstellung von Polyisocyanurat-Schaumstoffen, insbesondere solchen, welche keine zusätzlichen Brandschutzmittel auf Phosphor- oder Halogenbasis enthalten, und die PIR-Schaumstoffe trotzdem noch die Einstufung in die Baustoffklasse B/2 mit sehr guten Flammenhöhe-Werten erreichen, ohne daß im Brandfall korrodierend wirksame Rauchgase auftreten.

**Patentansprüche**

1. Stickstoffhaltige Esterpolyole der Formel (I), ihre Gemische oder Oligomergemische

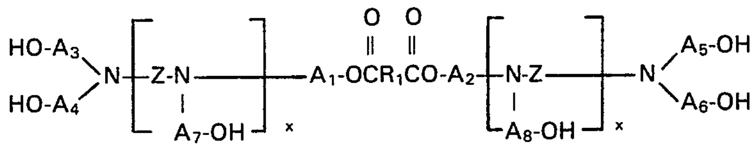

(I),

in der

$R_1$ eine Bindung oder ein geradkettiger oder verzweigter $C_1$-$C_{12}$-Alkylenrest, der gegebenenfalls durch Heteroatome wie -O-, -S-, -N($C_1$-$C_4$)-Alkyl substituiert sein kann oder ein ungesättigter Alkenrest mit 2-12 C-Atomen, und

Z ein zweiwertiger, geradkettiger oder verzweigter Alkylenrest mit 2 bis 6 C-Atomen ist,

x unabhängig voneinander 0 oder 1, bevorzugt x = 0 ist,

$A_1$ bis $A_8$ gleiche oder verschiedene, zweiwertige, geradkettige oder verzweigte Alkylenreste mit 2 bis 6 C-Atomen, vorzugsweise $-CH_2-CH_2-$, $-(CH_2)_3-$, $-(CH_2)_4$ sowie $-CH_2-CH-$, $CH_2-CH_2-CH-$,
| |
$CH_3$ $CH_3$
$CH_2CH_2-CH_2-CH$-Reste,
|
$CH_3$
bei denen die sekundäre -CH-Gruppe einer Hydroxylgruppe benachbart ist, insbesondere $-CH_2-CH_2-$ oder $CH_2-CH$-Reste darstellen
|
$CH_3$
und wobei in den Polyesterpolyolen (I) oder ihren Gemischen bzw. ihren Oligomergemischen mindestens 20 Mol-% der Reste $A_3$ bis $A_6$, vorzugsweise 25 bis 75 Mol-%, insbesondere 50 bis 75 Mol-% der Reste, Reste mit einer sekundären -CH-Gruppe (entsprechend einem sekundären Hydroxyalkylrest) vorzugsweise einen $-CH_2-CH-$, $CH_2-CH_2-CH-$ oder
| |
$CH_3$ $CH_3$
$CH_2-CH_2-CH_2-CH$-Rest, sind
|
$CH_3$
und wobei die Reste $A_1$ und $A_2$ zu mehr als 75 Mol-% geradkettige Alkylenreste darstellen und die Polyesterpolyole OH-Zahlen von 200 bis 700 und Viskositäten von < 20 000 mPa.s/25°C und im Fall der Oligopolyesterpolyole < 90 000 mPa.s/25°C besitzen.

2. Esterpolyole nach Anspruch 1, dadurch gekennzeichnet, daß in der Formel (I)

$R_1$ ein geradkettiger und/oder ein verzweigter Alkylenrest mit 2-4 C-Atomen oder der ungesättigte -CH=CH-Rest ist.

3. Esterpolyole nach Ansprüchen 1 und 2, dadurch gekennzeichnet, daß in der Formel (I)

Z Alkylenreste aus der Reihe $-CH_2-CH_2$, $-CH_2-CH-$
|
$CH_3$
$-(CH_2)_3-$, $-(CH_2)_4-$ oder $-(CH_2)_6$ darstellen.

4. Esterpolyole nach Anspruch 1, welche (zu mehr als 75 Gew.-%) den Formeln (Ia), (Ih)

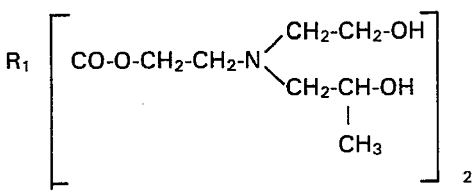

(Ia)

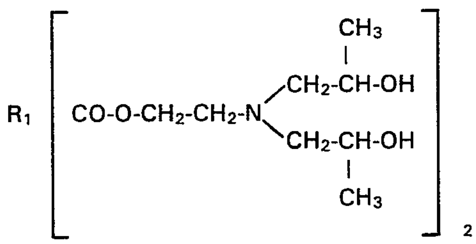

(Ih)

oder Mischkondensaten von (Ia) und (Ih), sowie

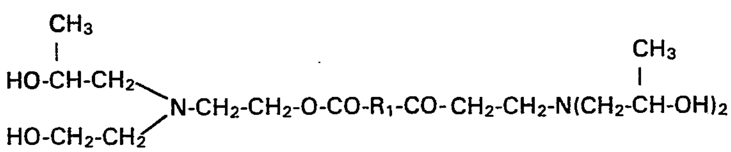

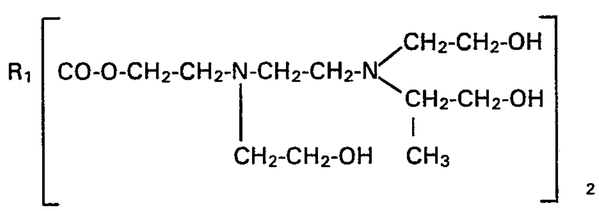

(Im)

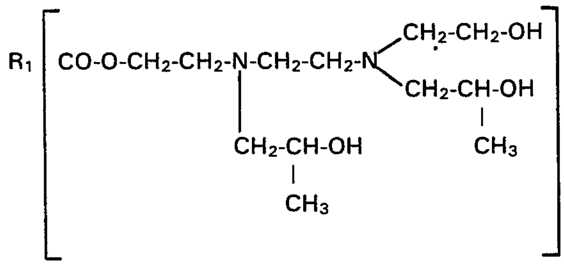

(Ip)

und/oder

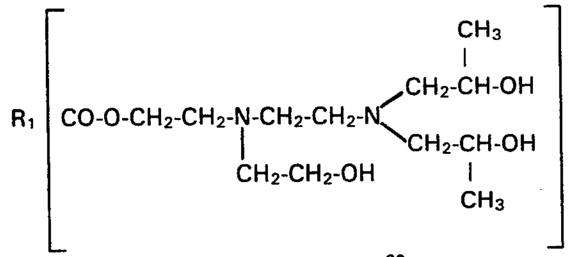

(Iq)

entsprechen.

5. Verfahren zur Herstellung der Esterpolyole der allgemeinen Formel (I), ihrer Gemische oder ihrer Oligomer-Gemische durch Umsetzung von Dicarbonsäure(derivaten)

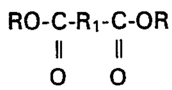

(R = H, Alkyl, Phenyl)
oder ihrer Anhydride

mit Trisalkanolaminen (II)

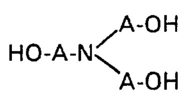

und/oder Tetrakis-alkanoldiaminen (III)

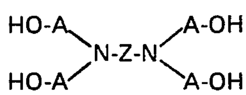

wobei wobei $R_1$ und Z die angegebene Bedeutung haben und A primäre und sekundäre Reste $A_1$-$A_8$ der angegebenen Bedeutung sind,

im Molverhältnis von Dicarbonsäure(derivate)n zu Trisalkanolaminen (II) und/oder Tetrakis-alkanoldiaminen (III) von 1:1,2 bis 1:2,

unter Um- oder Veresterungsbedingungen, gegebenenfalls in Gegenwart von Umesterungskatalysatoren zu Esterpolyolengemischen oder ihren Oligomer(gemisch)en, mit einer Viskosität von < 90 000 mPa.s/25°C.

6. Verfahren nach Anspruch 5, dadurch gekennzeichnet, daß die Dicarbonsäure(derivate) mit den Trisalkanolaminen (II)

a) 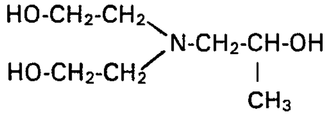

h) 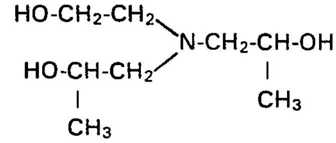

oder ihren Gemischen
und/oder

m) 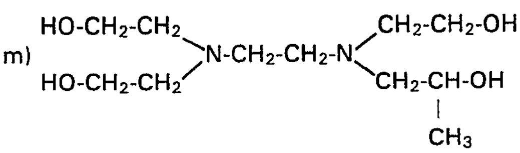

p) 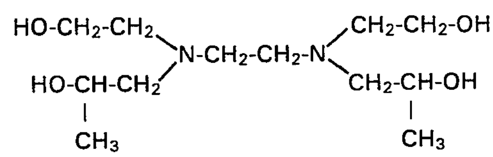

q) 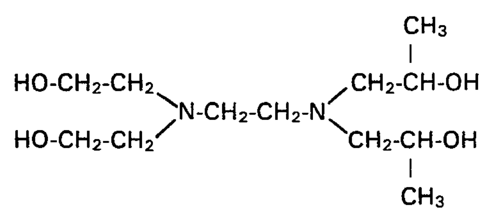

umgesetzt werden.

7. Verwendung niederviskoser, stickstoffhaltiger Esterpolyole nach den Ansprüchen 1 bis 4, mit einer OH-Funktionalität von etwa 4 bis 6, weniger bevorzugt ihrer höherviskosen, höherfunktionellen Oligomeren, als alleinige oder anteilige Polyolkomponenten, gegebenenfalls unter Zusatz von üblichen Flammschutzmitteln, im Isocyanat-Polyadditionsverfahren zur Herstellung von Polyurethanen, vorzugsweise Hartschaumstoffen auf Polyurethan-(harnstoff)-Basis und insbesondere Polyisocyanurat-Basis.

8. Verwendung nach Anspruch 7, dadurch gekennzeichnet, daß man die Esterpolyole zur Herstellung von Polyisocyanurat-Hartschaumstoffen ohne Mitverwendung von Flammschutzmitteln auf Phosphor- und/oder Halogenbasis einsetzt.

**Claims**

1. Nitrogen-containing ester polyols corresponding to formula (I) below, mixtures or oligomer mixtures thereof

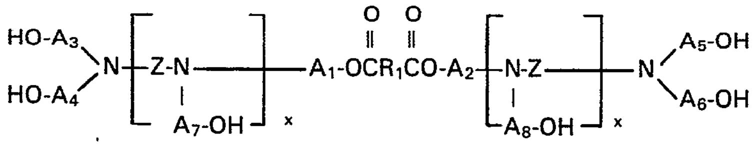

(I)

in which

$R_1$ is a bond or a straight-chain or branched $C_1$-$C_{12}$ alkylene radical, which may optionally be substituted by heteroatoms such as -O-, -S-, -N($C_1$-$C_4$)-alkyl or an unsaturated $C_2$-$C_{12}$ alkene radical,

Z represents a difunctional, straight-chain or branched $C_2$-$C_6$ alkylene radical,

x independently of one another have the value 0 or 1, preferably the value 0,

$A_1$ to $A_8$ may be the same or different and represent difunctional, straight-chain or branched alkylene radicals containing from 2 to 6 carbon atoms, preferably $-CH_2-CH_2-$, $-(CH_2)_3-$, $-(CH_2)_4$ and $-CH_2-CH-$, $CH_2-CH_2-CH-$, $CH_2CH_2-CH_2-CH$-radicals,

| | |

$CH_3$ $CH_3$ $CH_3$

in which the secondary -CH-group is adjacent a hydroxy group, more especially $-CH_2-CH_2-$ or $-CH_2-CH$-radicals at least 20, preferably from 25 to

|

$CH_3$

75 and more preferably from 50 to 75 mol-% of the radicals $A_3$ to $A_6$ in the polyester polyols (I) or their mixtures or oligomer mixtures being radicals containing a secondary -CH-group (corresponding to a secondary hydroxyalkyl radical), preferably a $-CH_2-CH-$, $-CH_2-CH_2-CH-$ or $-CH_2-CH_2-CH$-radical,

| | |

$CH_3$ $CH_3$ $CH_3$

and more than 75 mol-% of the radicals $A_1$ and $A_2$ are straight-chain alkylene esters and the ester polyols have OH numbers of from 200 to 700 and viscosities of $< 20\ 000$ mPa.s/25°C and, in the case of oligoester polyols, viscosities of $< 90\ 000$ mPa.s/25°C.

2. Ester polyols as claimed in Claim 1, characterized in that, in formula (I), $R_1$ is a straight-chain and/or branched $C_2$-$C_4$ alkylene radical or the unsaturated -CH = CH- radical

3. Ester polyols as claimed in Claims 1 and 2, characterized in that, in formula (I), Z represents alkylene radicals from the series $-CH_2-CH_2$, $-CH_2-CH-$, $-(CH_2)_3-$, $-(CH_2)_4-$ or $-(CH_2)_6$.

|

$CH_3$

4. Ester polyols as claimed in Claim 1 which correspond predominantly (more than 75% by weight) to formula Ia and Ih

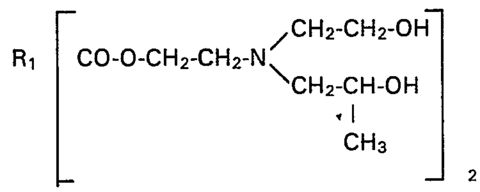

(Ia)

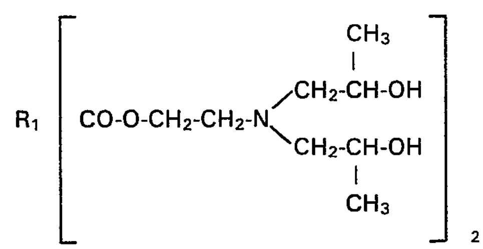

(Ih)

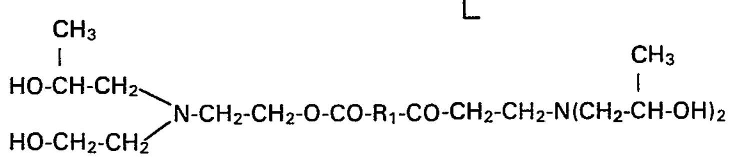

or mixed condensates of (Ia) and (Ih) and also

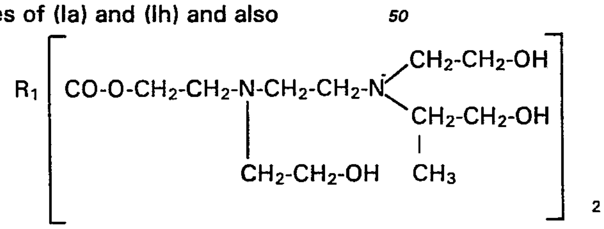

(Im)

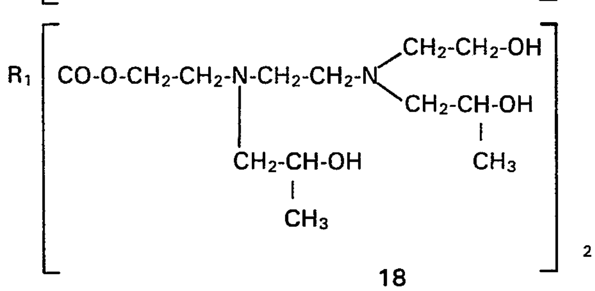

(Ip)

and/or

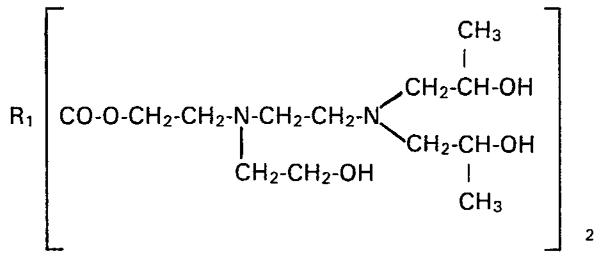

(Iq)

5. A process for producing the ester polyols of general formula (I), mixtures or oligomer mixtures thereof by reaction of dicarboxylic acid (derivative)s

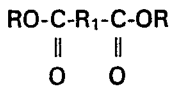

(R = H, alkyl, phenyl)
or their anhydrides

with tris-alkanolamines (II)

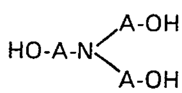

and/or tetrakis-alkanol diamines (III)

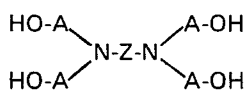

$R_1$ and Z being as defined above and the radicals A being primary and secondary radicals $A_1$ to $A_8$ as defined above,

in a molar ratio of dicarboxylic acid (derivative)s to tris-alkanolamines (II) and/or tetrakis-alkanol diamines (III) of from 1:1.2 to 1:2

under transesteririfaction or esterification conditions, optionally in the presence of transesterification catalysts, to form ester polyol mixtures or oligomer (mixture)s thereof having a viscosity of < 90 000 mPa.s/25°C.

6. A process as claimed in Claim 5, characterized in that the dicarboxylic acid (derivate)s are reacted with the tris-alkanolamines (II)

a) 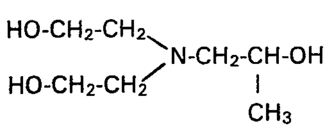

h) 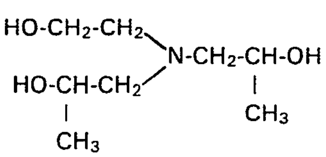

or mixtures thereof
and/or

m) 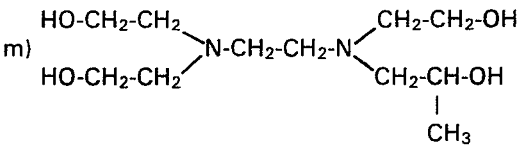

p) 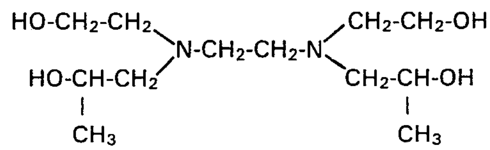

q) 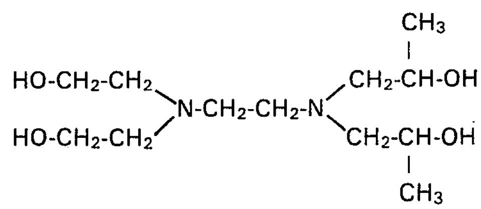

7. The use of the low-viscosity, nitrogen-containing ester polyols claimed in Claim 1 to 4, having an OH-functionallity of from about 4 to 6, less preferably their relatively high viscosity, relatively high functionality oligomers, as sole or co-polyol components, optionally in conjunction with standard flameproofing agents, in the isocyanate polyaddition process for the production of polyurethanes, preferably rigid polyurethane (urea) foams and more especially rigid polyisocyanurate foams.

8. The use claimed in Claim 7, characterized in that the ester polyols are used for the production of rigid polyisocyanurate foams without the use of phosphorus- and/or halogen-based flameproofing agents.

**Revendications**

1. Ester-polyols azotés, de formule (I), leurs mélanges ou leurs mélanges d'oligomères, de formule:

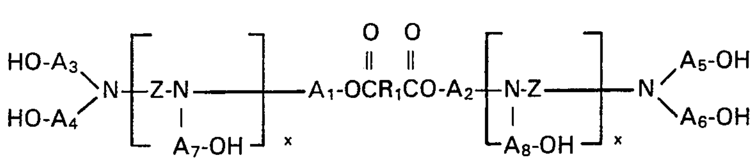

(I)

dans laquelle

$R_1$ représente une liaison ou un reste alkylène en $C_1$ à $C_{12}$, linéaire ou ramifié, qui peut éventuellement être substitué par de hétéroatomes comme -O-, -S-, ou par un groupe -N(alkyle en $C_1$ à $C_4$) ou $R_1$ représente un reste alcène ayant 2 à 12 atomes de carbone, et

Z représente un reste alkylène divalent, linéaire ou ramifié, comportant 2 à 6 atomes de carbone,

les symboles x valent, indépendamment l'un de l'autre, 0 ou 1, et de préférence x est nul,

les symboles $A_1$ à $A_8$ représentent des restes alkylènes identiques ou differents, divalents, linéaires ou ramifiés, comportant 2 à 6 atomes de carbone, avantageusement des restes $-CH_2-CH_2-$, $-(CH_2)_3-$, $-(CH_2)_4$ ainsi que des restes $-CH_2-CH-$,
|
$CH_3$

$-CH_2-CH_2-CH-$, $-CH_2CH_2-CH_2-CH-$,
| |
$CH_3$ $CH_3$

dans lesquels le groupe -CH- secondaire est voisin d'un groupe hydroxyle, en particulier ils représentent des restes $-CH_2-CH_2-$ ou $-CH_2-CH-$, et
|
$CH_3$

dans les polyester-polyols (I) ou dans leurs mélanges ou leurs mélanges d'oligomères, au moins 20 mol% des restes $A_3$ à $A_6$, avantageusement 25 à 75 mol%, en particulier 50 à 75 mol% des restes sont des restes comportant un groupe -CH- secondaire (ce qui correspond à un reste hydroxyalkyle secondaire), de préférence un reste $-CH_2-CH-$,
|
$CH_3$

$-CH_2-CH_2-CH-$ ou $-CH_2-CH_2-CH_2-CH-$, et les restes
| |
$CH_3$ $CH_3$

$A_1$ et $A_2$ constituent pour plus de 75 mol% des restes alkylènes linéaires et les polyester-polyols ont des indices de OH de 200 à 700 et des viscosités inférieures à 20 000 mPa.s/25°C et, dans le cas de oligopolyester-polyols, des viscosités inférieures à 90 000 mPa.s/25°C.

2. Ester-polyols selon la revendication 1, caractérisés en ce que, dans la formule (I),

$R_1$ représente un reste alkylène linéaire ou ramifié, comportant 2 à 4 atomes de carbone, ou le reste -CH = CH- insaturé.

3. Ester-polyols selon les revendications 1 et 2, caractérisés en ce que, dans la formule (I), les symboles Z représentent des restes de la série $-CH_2-CH_2$, $-CH_2-CH-$, $-(CH_2)_3-$, $-(CH_2)_4-$, ou $-(CH_2)_6$.
|
$CH_3$

4. Ester-polyols selon la revendication 1 qui répondent (pour plus de 75% en poids) aux formules (Ia), (Ih):

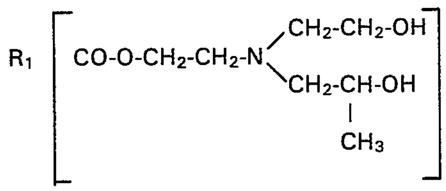

(Ia)

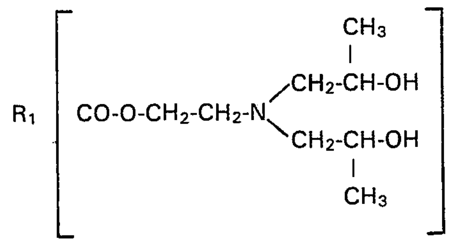

(Ih)

ou des produits de co-condensation (Ia) et de (Ih), ainsi que

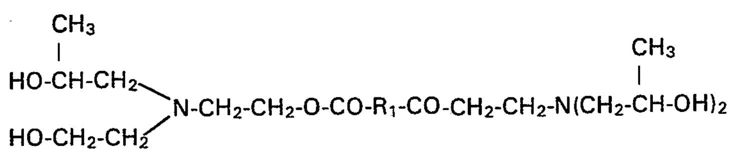

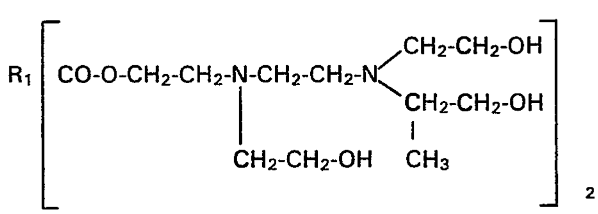

(Im)

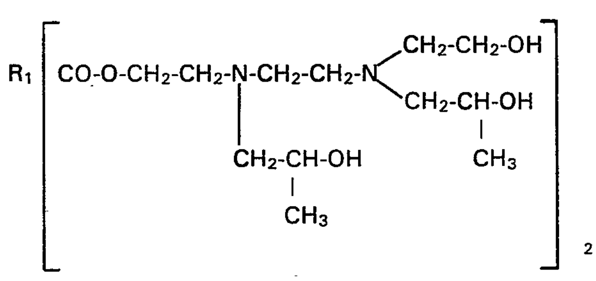

(Ip)

et/ou

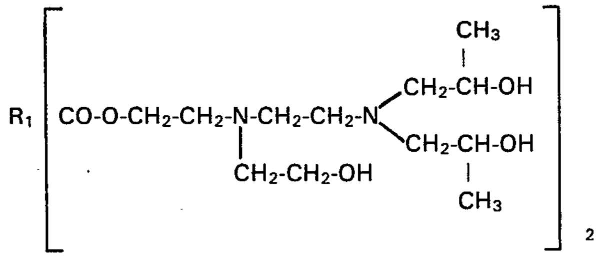

(Iq)

5. Procédé pour préparer les ester-polyols de formule générale (I), leurs mélanges ou leurs mélanges d'oligoméres, par réaction d'acides dicarboxyliques (ou de dérivés de tels acides)

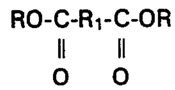

(dans lesquels R représente H ou un groupe alkyle ou phényle),

ou de leurs anhydrides,

avec des trisalcanolamines (II)

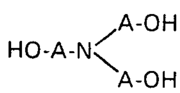

et/ou des tétrakis-alcanoldiamines (III)

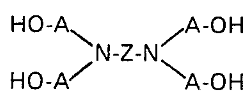

dans lesquelles $R_1$ et Z ont le sens indiqué et A représente des restes $A_1$ à $A_8$, primaires et secondaires, ayant le sens indiqué,

selon un rapport molaire des acides dicarboxyliques (ou leurs dérivés) aux trisalcanolamines (II) et/ou aux tétrakis-alcanoldiamines (III) de 1:1,2 à 1:2,

dans des conditions de transestérification ou d'estérification, éventuellement en présence de catalyseurs de transestérification, ce qui donne des mélanges d'ester-polyols ou leurs oligomères ou des mélanges d'oligomères, ayant une viscosité inférieure à 90 000 mPa.s/25°C.

6. Procédé selon la revendication 5, caractérisé en ce qu'on fait réagir des acides dicarboxyliques (ou leurs dérivés) avec les trisalcanolamines (II)

a) 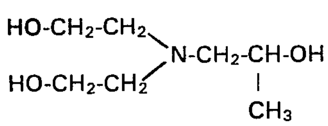

h) 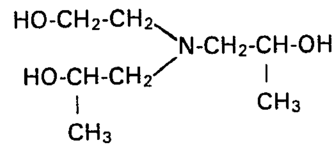

ou avec leurs mélanges,
et/ou avec

m) 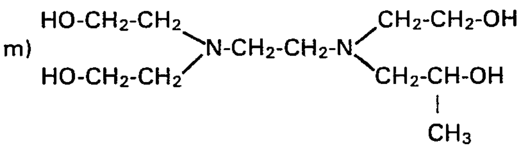

p) 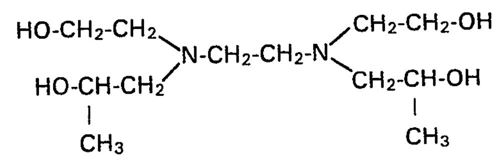

q) 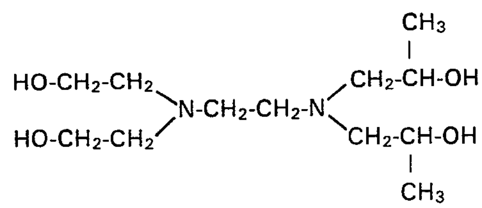

7. Utilisation d'ester-polyols azotés, à faible viscosité, selon les revendications 1 à 4, comportant environ 4 à 6 groupes fonctionnels OH, et de façon moins préférée de leurs oligomères plus visqueux, présentant un plus grand nombre de groupes fonctionnels, comme composants polyols, utilisés isolément ou comme constituant une partie du composant polyol, éventuellent avec addition d'agents usuels de protection contre la propagation d'une flamme, dans un procédé de polyaddition d'isocyanate pour produire des polyuréthannes, avantageusement des mousses dures ou rigides à base de polyuréthanne (urée) et en particulier à base de polyisocyanurate.

8. Utilisation selon la revendication 7, caractérisée en ce qu'on utilise les ester-polyols pour préparer des mousses rigides de polyisocyanurates, sans faire simultanément appel à des agents, à base de phosphore ou d'halogène, pour la protection contre la propagation d'une flamme.